(19) Europäisches Patentamt / European Patent Office / Office européen des brevets

(11) **EP 2 806 581 B1**

(12) **EUROPEAN PATENT SPECIFICATION**

(45) Date of publication and mention
of the grant of the patent:
**14.09.2016 Bulletin 2016/37**

(21) Application number: **13738904.5**

(22) Date of filing: **17.01.2013**

(51) Int Cl.:
*H04J 1/02* (2006.01)    *H04L 5/00* (2006.01)

(86) International application number:
**PCT/KR2013/000364**

(87) International publication number:
**WO 2013/109060 (25.07.2013 Gazette 2013/30)**

(54) **METHOD AND APPARATUS FOR TRANSMITTING UPLINK DATA IN WIRELESS COMMUNICATION SYSTEM**

VERFAHREN UND VORRICHTUNG ZUR ÜBERTRAGUNG VON UPLINK-DATEN IN EINEM DRAHTLOSEN KOMMUNIKATIONSSYSTEM

PROCÉDÉ ET APPAREIL POUR LA TRANSMISSION DE DONNÉES SORTANTES DANS UN SYSTÈME DE COMMUNICATION SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.01.2012   US 201261587130 P**
**30.01.2012   US 201261592562 P**
**13.02.2012   US 201261598315 P**

(43) Date of publication of application:
**26.11.2014 Bulletin 2014/48**

(73) Proprietor: **LG Electronics Inc.**
**Seoul 150-721 (KR)**

(72) Inventors:
• **PARK, Jonghyun**
**Anyang-si**
**Gyeonggi-do 431-080 (KR)**
• **KIM, Kijun**
**Anyang-si**
**Gyeonggi-do 431-080 (KR)**

(74) Representative: **Frenkel, Matthias Alexander**
**Wuesthoff & Wuesthoff**
**Patentanwälte PartG mbB**
**Schweigerstrasse 2**
**81541 München (DE)**

(56) References cited:
**US-A1- 2011 098 054**

• **PANTECH: "Aperiodic sounding enhancements for CoMP", 3GPP DRAFT; R1-113834 APERIODIC SOUNDING ENHANCEMENTS FOR COMP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. San Francisco, USA; 20111114 - 20111118, 8 November 2011 (2011-11-08), XP050561926, [retrieved on 2011-11-08]**
• **ALCATEL-LUCENT ET AL.: 'On the need of SRS Enhancement for UL CoMP' RL-114052, 3GPP TSG RAN WG1 MEETING #67 14 November 2011, SAN FRANCISCO, USA, XP050562217**
• **FUJITSU: 'Consideration on SRS enhancement for CoMP' RL-114181, 3GPP TSG RAN WG1 MEETING #67 14 November 2011, SAN FRANCISCO, USA, XP050562307**
• **ERICSSON ET AL.: 'Potential Enhancements for SRS' RL-114255, 3GPP TSG RAN WG1 MEETING #67 14 November 2011, SAN FRANCISCO, USA, XP050562204**
• **POTEVIO: 'Considerations on uplink sounding enhancements' 3GPP TSG RAN WG1 MEETING #67 14 November 2011, SAN FRANCISCO, USA, XP050562104**

**Description**

[Field of the Invention]

The following description relates to a wireless communication system and, more particularly, a method and apparatus for transmitting uplink data with respect to sounding reference signal configuration.

[Background Art]

A Sounding Reference Signal (SRS) corresponds to a signal being transmitted by a user equipment (UE) via uplink, and the SRS may mostly be used by a base station for performing quality measurement of an uplink channel.
When an SRS is transmitted, the SRS is transmitted over a last Single Carrier Frequency Division Multiple Access (SC-FDMA) symbol of a subframe. If uplink data are transmitted along with the SRS, the uplink data cannot be mapped to the SC-FDMA symbol, which is occupied by the SRS.
In the related art, since one user equipment was only required to SRS with respect to one serving base station (or one serving cell), it was sufficient for the base station to notify a cycle period according to which user equipments within a cell are intended to transmit the SRS and one SRS subframe configuration, which is specific by an offset.
SRS is described in US 2011/0098054 A1 and 3GPP document R1-114052. Reference is also described in 3GPP documents R1-113834, R114181, R1-114255 and R1-114129.

[Detailed Description of the Invention]

[Technical Objects]

In an evolved wireless communication system, operations of one user equipment performing uplink transmission with respect to multiple base stations (or cells or reception points (RPs)) (*e.g.*, uplink Coordinated Multi-Point operations) may be supported. In this case, if the user equipment is incapable of clearly determining a specific cell, among a plurality of cells, which is assigned with a cell-specific SRS subframe configuration according to which uplink transmission is to be performed, ambiguity may occur in determining whether or not to map uplink data to a last symbol of a corresponding subframe.
In the present invention, a technical object is to provide a solution for accurately and appropriately determining cell-specific SRS subframe configurations, which are to be considered when a user equipment performs uplink data transmission.
The effects of the present invention will not be limited only to the technical objects described above. Accordingly, technical objects that have not been mentioned above or additional technical objects of the present application may become apparent to those having ordinary knowledge and skill in the art from the description presented below.

[Technical Solutions]

In order to resolve the above-described technical object, a method of transmitting uplink data by a user equipment in a wireless communication system is defined in independent claim 1.
A user equipment for transmitting uplink data is defined in claim 10. Variants improvements are recited in dependent claims.
The general description of the present invention provided above and the detailed description of the present invention that will follow are merely exemplary and are provided for additional description of the appended claims of the present invention.

[Advantageous Effects]

According to the present invention, a solution for accurately and appropriately determining a cell-specific SRS subframe configuration, which should be taken into consideration when a user equipment performs uplink data transmission, may be provided.
The effects of the present invention will not be limited only to the effects described above. Accordingly, effects that have not been mentioned above or additional effects of the present application may become apparent to those having ordinary skill in the art from the description presented below.

[Brief Description of the Drawings]

The accompanying drawings, which are included as a part of the detailed description in order to provide a further understanding of the present invention, provide exemplary embodiments of the present invention and describe the technical aspects of the present invention along with the detailed description.

Fig. 1 illustrates a drawing for describing a structure of a wireless frame.
Fig. 2 illustrates an exemplary resource grid.
Fig. 3 illustrates a structure of a downlink subframe.
Fig. 4 illustrates a structure of an uplink subframe.
Fig. 5 illustrates a drawing for describing a downlink reference signal.
Fig. 6 illustrates a drawing for describing reference signal transmission in an uplink subframe.
Fig. 7 illustrates a drawing for describing a number of PUSCH transmission SC-FDMA symbols in an uplink subframe.
Fig. 8 illustrates an exemplary uplink CoMP operation.
Fig. 9 and Fig. 10 respectively illustrate other exemplary uplink CoMP operations.
Fig. 11 illustrates a drawing for describing operations of the present invention, when radio frame timing between multiple RPs is different from one another.
Fig. 12 illustrates a flow chart showing an uplink data transmission method according to the present invention.
Fig. 13 illustrates a structure of a user equipment device according to a preferred embodiment of the present invention.

[Best Mode for Carrying Out the Present Invention]

The embodiments described below correspond to predetermined combinations of elements and features and characteristics of the present invention. Moreover, unless mentioned otherwise, the characteristics of the present invention may be considered as optional features of the present invention. Herein, each element or characteristic of the present invention may also be operated or performed without being combined with other elements or characteristics of the present invention. Alternatively, the embodiment of the present invention may be realized by combining some of the elements and/or characteristics of the present invention. Additionally, the order of operations described according to the embodiment of the present invention may be varied. Furthermore, part of the configuration or characteristics of any one specific embodiment of the present invention may also be included in (or shared by) another embodiment of the present invention, or part of the configuration or characteristics of any one embodiment of the present invention may replace the respective configuration or characteristics of another embodiment of the present invention.

In the description of the present invention, the embodiments of the present invention will be described by mainly focusing on the data transmission and reception relation between the base station and the terminal (or user equipment). Herein, the base station may refer to a terminal node of the network that performs direct communication with the terminal. Occasionally, in the description of the present invention, particular operations of the present invention that are described as being performed by the base station may also be performed by an upper node of the base station.

More specifically, in a network consisting of multiple network nodes including the base station, it is apparent that diverse operations that are performed in order to communicate with the terminal may be performed by the base station or b network nodes other than the base station. Herein, the term 'Base Station (BS)' may be replaced by other terms, such as fixed station, Node B, eNode B (eNB), Access Point (AP), and so on. Also, in the description of the present invention, the term base station may also be used as a term including the concept of a cell or sector. Meanwhile, the term 'relay' may be replaced by terms including Relay Node (RN), Relay Station (RS), and so on. And, the term 'Terminal' may be replaced by terms including UE (User Equipment), MS (Mobile Station), MSS (Mobile Subscriber Station), SS (Subscriber Station), and so on.

The specific terms used in the following description of the present invention are provided to facilitate the understanding of the present invention. And, therefore, without deviating from the technical scope of the present invention, such specific terms may also be varied and/or replaced by other terms.

In some cases, in order to avoid any ambiguity in the concept (or idea) of the present invention, some of the structures and devices disclosed (or mentioned) in the present invention may be omitted from the accompanying drawings of the present invention, or the present invention may be illustrated in the form of a block view focusing only on the essential features or functions of each structure and device. Furthermore, throughout the entire description of the present invention, the same reference numerals will be used for the same elements of the present invention.

Herein, the embodiments of the present invention may be supported by at least one the disclosed standard documents for wireless access systems including the IEEE 802 system, the 3GPP LTE system, the LTE-A (LTE-Advanced) system, and the 3GPP2 system. More specifically, among the embodiments of the present invention, partial operation steps or structures of the present invention, which have been omitted from the description of the present invention in order to specify and clarify the technical scope of the present invention may also be supported by the above-described standard documents. Furthermore, the terms disclosed in the description of the present invention may be described based upon the above-mentioned standard documents.

The technology described below may be used in a wide range of wireless access systems, such as CDMA (Code Division Multiple Access), FDMA (Frequency Division Multiple Access), TDMA (Time Division Multiple Access), OFDMA (Orthogonal Frequency Division Multiple Access), Single Carrier Frequency Division Multiple Access (SC-FDMA), and so on. Herein, the CDMA may be realized by a radio technology such as UTRA (Universal Terrestrial Radio Access) or CDMA2000. The TDMA may be realized by a radio technology such as GSM (Global System for Mobile communications)/GPRS (General Packet Radio Service)/EDGE (Enhanced Data Rates for GSM Evolution). The OFDMA may be realized by a radio technology such as IEEE 802.11 (Wi-Fi), IEEE 802.16 (WiMAX), IEEE 802-20, E-UTRA (Evolved UTRA), and so on. The UTRA corresponds to a portion of the UMTS (Universal Mobile Telecommunications System). And, as a portion of the E-UMTS (Evolved UMTS) using the E-UTRA, the 3GPP (3rd Generation Partnership Project) LTE (long term evolution) system adopts the OFDMA in a downlink and adopts the SC-FDMA in an uplink. The LTE-A (LTE-Advanced) corresponds to an evolved version of the 3GPP LTE system. The WiMAX may be described based upon the IEEE 802.16e standard (WirelessMAN-OFDMA Reference System) and the evolved IEEE 802.16m standard (WirelessMAN-OFDMA Advanced system). For the clarity in the description of the present invention, the present invention will be described based upon the 3GPP LTE system and the 3GPP LTE-A system. Nevertheless, the scope of the present invention will not be limited only to those of the 3GPP LTE system and the 3GPP LTE-A system.

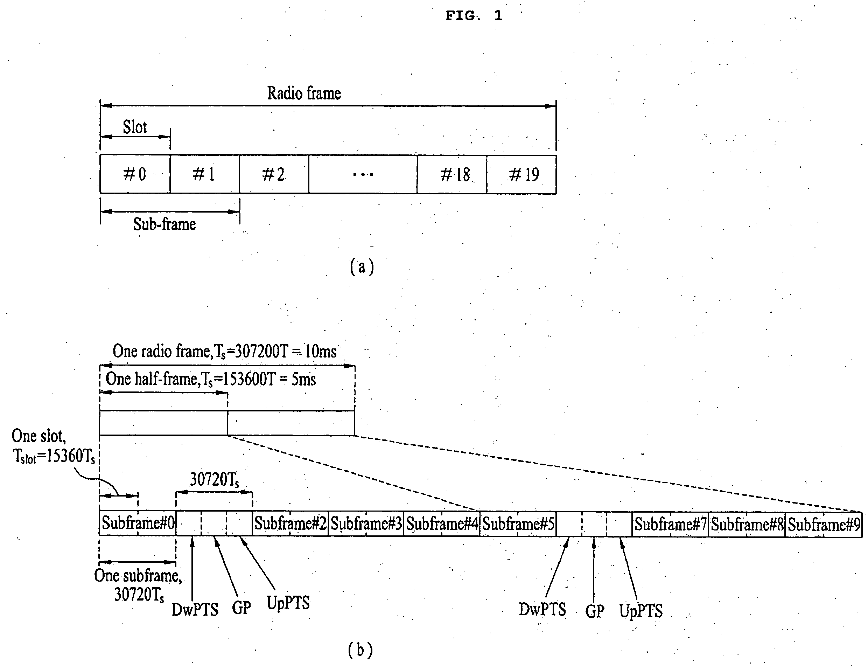

A structure of a radio frame (or wireless frame) of a 3GPP LTE system will hereinafter be described with reference to Fig. 1.

In a cellular OFDM (Orthogonal Frequency Division Multiplex) radio packet communication system, uplink/downlink data packet transmission is performed in subframe, units, and once subframe is defined as a predetermined time period (or time section) including multiple OFDM symbols. The 3GPP LTE standard supports a Type 1 radio frame structure, which is applicable to FDD (Frequency Division Duplex), and a Type 2 radio frame structure, which is applicable to TDD (Time Division Duplex).

Fig. 1(a) illustrates a drawing showing an exemplary structure of a type 1 radio frame. A radio frame (or wireless frame) is configured of 10 subframes, and one subframe is configured of 2 slots in a time domain. The time consumed (or taken) for one subframe to be transmitted is referred to as a TTI (transmission time interval), and, for example, the length of one subframe may be equal to 1ms, and the length of one slot may be equal to 0.5ms. One slot includes a plurality of OFDM symbols in the time domain and includes a plurality of Resource Blocks (RBs) in the frequency domain. Since the 3GPP LTE uses the OFDMA in a downlink, an OFDM symbol indicates one symbol section. Additionally, the OFDM symbol may also be referred to as an SC-FDMA symbol or a symbol section. A Resource Block (RB) corresponds to a resource allocation unit and may include a plurality of consecutive subcarriers in one slot.

The number of OFDM symbols included in one slot may vary depending upon the configuration of a CP (Cyclic Prefix). The CP may be divided into an extended CP and a normal CP. For example, in case the OFDM symbol is configured of a normal CP, the number of OFDM symbols included in one slot may be equal to 7. And, in case the OFDM symbol is configured of an extended CP, since the length of an OFDM symbol is increased, the number of OFDM symbols included in one slot becomes smaller than when the OFDM symbol is configured of a normal CP. In case of the extended CP, for example, the number of OFDM symbols included in one slot may be equal to 6. In case the user equipment is moving at high speed, or in case the channel status is unstable, the extended CP may be used in order to further reduce the interference between the symbols.

Fig. 1(b) illustrates a drawing showing a structure of a type 2 radio frame. The type 2 radio frame consists of 2 half frames, and each half frame is configured of 5 general subframes and a DwPTS (Downlink Pilot Time Slot), a Guard Period (GP), and a UpPTS (Uplink Pilot Time Slot), wherein 1 subframe is configured of 2 slots. The DwPTS is used for performing initial cell search, synchronization or channel estimation in the user equipment. And, the UpPTS is used for matching a channel estimation performed in the based station with an uplink transmission synchronization performed in the user equipment. The guard period refers to a period for eliminating (or removing) interference that occurs in an uplink, due to a multiple path delay of a downlink signal between an uplink and a downlink. Meanwhile, regardless of the type of the radio frame, one subframe is configured of 2 slots.

The structure of the radio frame is merely exemplary. And, therefore, the number of subframes included in the radio frame or the number of slots included in a subframe, and the number of symbols included in one slot may be diversely varied.

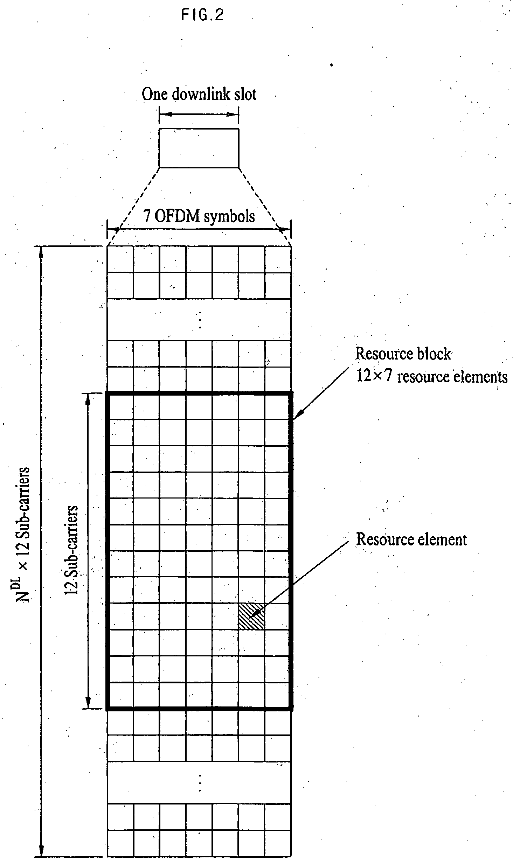

Fig. 2 illustrates an exemplary resource grid of a downlink slot. Although it is shown in the drawing that a downlink slot may include 7 OFDM symbols in a time domain, and that a resource block (RB) may include 12 sub-carriers in the frequency domain, the present invention will not be limited only to this. For example, in case of a normal CP (Cyclic Prefix), one slot may include 7 OFDM symbols, however, in case of an extended-CP, one slot may include 6 OFDM symbols. Each element within the resource grid is referred to as a Resource Element (RE): One resource block includes 12x7 resource elements. And, $N^{DL}$ number of resource blocks included in a downlink slot follows a downlink transmission bandwidth. The structure of an uplink slot may be identical to the structure of the downlink slot.

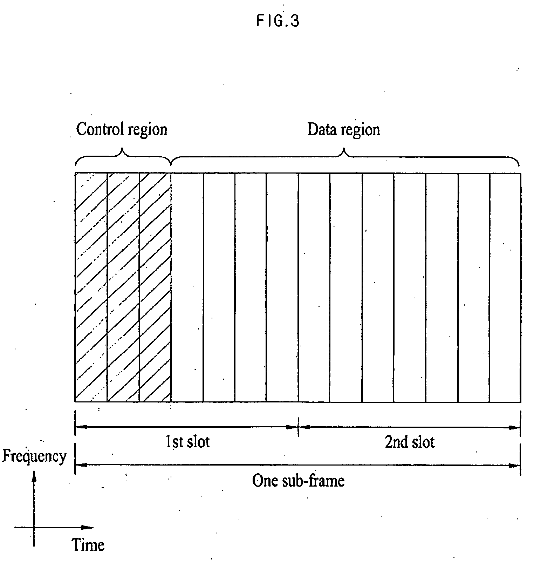

Fig. 3 illustrates a structure of a downlink subframe. In a subframe, a maximum of 3 OFDM symbols located at the front portion (or beginning) of a first slot within one subframe collectively corresponds to a control region, wherein a control channel is allocated (or assigned). The remaining OFDM symbols collectively correspond to a data region, wherein a Physical Downlink Shared Channel (Physical Downlink Shared Chancel; PDSCH) is assigned. Examples of the downlink control channels that are being used in the 3GGP LTE system may, for example, include a Physical Control Format Indicator Channel (PCFICH), a Physical Downlink Control Channel (PDCCH), a Physical Hybrid automatic repeat request Indicator Channel (PHICH), and so on. The PCFICH is transmitted from a first OFDM symbol of the subframe, and the PCFICH includes information on the number of OFDM symbols, which are being used for the transmission of control channels within the subframe. The PHICH corresponds to a response channel for the uplink, and the PHICH may include HARQ ACK/NACK signals. The control information being transmitted through the PDCCH may be referred to as Downlink Control Information (DCI). The DCI may include uplink or downlink scheduling information, or the DCI may include an uplink transmission power control command for an arbitrary user equipment group. The PDCCH may carry resource allocation and transmission format of a Downlink Shared Channel (DL-SCH), resource allocation information of an Uplink Shared Channel (UL-SCH), paging information of a Paging Channel (PCH), system information of the DL-SCH, resource allocation for an upper-layer control message, such as a Random Access Response, that is being transmitted over the PDSCH, a set (or collection) of transmission power control commands on individual user equipments within the arbitrary (or random) user equipment group, transmission power control information, activation of a VoIP (Voice over IP), and so on. Multiple PDCCHs may be transmitted within the control region. The user equipment may monitor the multiple PDCCHs. The PDCCH is configured of an aggregation of one CCE or multiple consecutive Control Channel Elements (CCEs). A CCE corresponds to a logical allocation unit used for providing a PDCCH with a coding rate based upon a wireless channel state. Herein, the CCE corresponds to a plurality of resource element groups. The number of formats and available number of bits of a PDCCH may be determined based upon a correlation between the number of CCEs and the coding rate provided by the CCEs. The base station decides a PDCCH format in accordance with the DCI that is to being transmitted to the user equipment and adds a Cyclic Redundancy Check (CRC) to the control information. Depending upon the owner or purpose of the PDCCH, the CRC may be masked by a Radio Network Temporary Identifier (RNTI). In case of a PDCCH for a particular user equipment, a Cell-RNTI (C-RNTI) of the user equipment may be masked to the CRC. Alternatively, in case of a PDCCH for a paging message, a Paging Indicator Identifier (P-RNTI) may be masked to the CRC. In case of a PDCCH for system information (more particularly, for a system information block (SIB)), a system information identifier and system information RNTI may be masked to the CRC. In order to indicate a random access response, which corresponds to a response to the transmission of a random access preamble of the user equipment, a random access-RNTI (RA-RNTI) may be masked to the CRC.

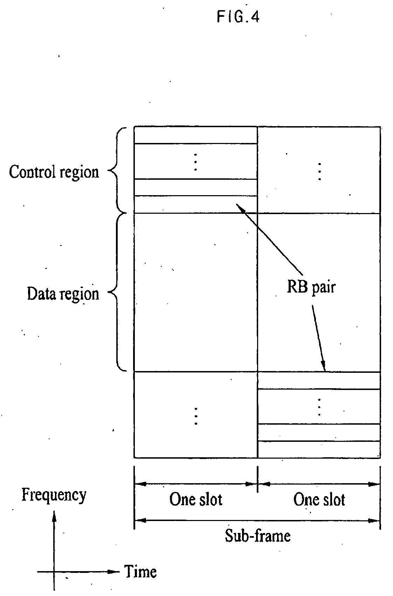

Fig. 4 illustrates a structure of an uplink subframe. An uplink subframe may be divided into a data region and a control region in the frequency domain. A Physical Uplink Control Channel (PUCCH) including uplink control information is allocated to the control region. And, a Physical Uplink Shared Channel (PUSCH) including user data is allocated to the data region. In order to maintain the characteristics of a single carrier, one user equipment does not transmit a PUCCH and a PUSCH at the same time. A PUCCH for a user equipment is allocated to a resource block pair (RB pair) in a subframe. And, the resource blocks (RBs) belonging to the resource block pair (RB pair) occupy different subcarriers in 2 slots. This may also be expressed as the RB pair, which is allocated to the PUCCH, being frequency-hopped at a slot boundary.

Reference Signal (RS)

In a radio communication system, since packets are transmitted through a radio channel, a signal may be distorted during transmission. In order to enable a receiving end to correctly receive the distorted signal, the distortion of the received signal should be corrected by using channel information. In order to detect the channel information, a method of detecting channel information by transmitting a signal, which is known by both the transmitting end and the receiving end, and by using a level of distortion, which occurs when the signal is being received through a channel, is generally used. The signal is also referred to as a Pilot Signal or a Reference Signal (RS).

When transmitting and receiving data using multiple antennae, the channel status of each transmission antenna and each reception antenna should be known in order to correctly receive the signal. Accordingly, a separate reference signal should exist for each transmission antenna.

A downlink reference signal includes a Common Reference Signal (CRS), which is shared by all user equipments within a cell, and a Dedicated Reference Signal (DRS), which is specified only for a specific user equipment. Information for channel estimation and demodulation may be provided by such reference signals. The CRS is used for estimating channels of a physical antenna group, and, as a reference signal that can be commonly received by all user equipments (UEs) within the cell, the CRS may be distributed throughout the entire band. The CRS may be used for the purpose of acquiring channel state information (CSI) and demodulating data.

The receiving end (user equipment) may estimate the channel state from the CRS and may feed-back an indicator associated with channel quality, such as a CQI (Channel Quality Indicator), a PMI (Precoding Matrix Index), and/or a RI (Rank Indicator), to the transmitting end (base station). The CRS may be also referred to as a cell-specific reference signal (RS).

Meanwhile, in case data demodulation is required to be performed within a PDSCH, the DRS may be transmitted through a respective RE. The user equipment may receive information indicating the presence or absence of the DRS from an upper layer, and the user equipment may receive information indicating that the DRS is valid only when the corresponding PDSCH is mapped. The DRS may also be referred to as a UE-specific reference signal or a Demodulation Reference Signal (DMRS). The DRS (or UE-specific reference signal) corresponds to a reference signal that is used for data demodulation, and by directly using the same precoding weight value, which is used on a specific user equipment when performing multi-antenna transmission, on the reference signal, when the user equipment receives the reference signal, the DRS (or UE-specific reference signal) allows an Equivalent channel, which consists of a combination of a precoding weight value being transmitted from each transmission antenna and a transmission channel, to be estimated.

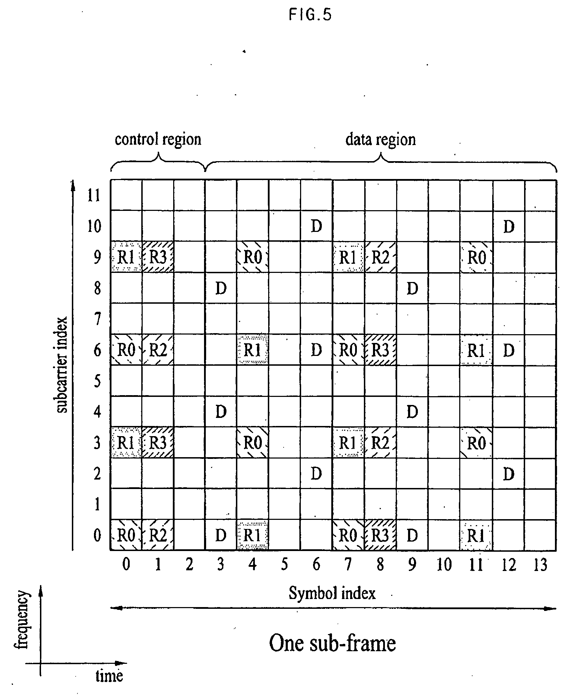

Fig. 5 illustrates a pattern of CRSs and DRSs mapped on a downlink RB pair defined in the existing 3GPP LTE system (e.g., Release-8). As a mapping unit of reference signals, the downlink RB pairs may be expressed in units of 12 subcarriers within a subframe×frequency in a time domain. More specifically, in case of a normal CP, one resource block pair has a length of 14 OFDM symbols within a time domain, and, in case of an extended CP, one resource block pair has a length of 12 OFDM symbols. Fig. 5 shows an example of a resource block pair of a normal CP.

Fig. 5 shows the positions of reference signals within a resource block pair in a system, wherein the base station supports 4 transmission antennae. In Fig. 5, Resource Elements (REs) that are marked as 'R0', 'R1', 'R2' and 'R3' respectively indicate the locations of the CRSs of the antenna port indexes 0, 1, 2 and 3. In Fig. 5, the RE marked as 'D' indicates the location of the DRS.

Meanwhile, in an LTE-A (Advanced) system, which corresponds to an evolution of the 3GPP LTE, a MIMO of a higher order, multiple-cell transmission, evolved MU-MIMO, and so on, are being considered, and, in order to support an efficient management of reference signals and a more evolved transmission method, DRS-based data demodulation is being considered. More specifically, apart from a DRS for Rank 1 beamforming (Antenna Port Index 5), which is defined in the conventional 3GPP LTE (e.g., Release-8), in order to support data transmission through an additionally included antenna, DRS (or UE-specific reference signal or DMRS) for 2 or more layers may be defined. For example, a UE-specific reference signal port, which supports a maximum of 8 transmission antenna ports, may be defined as antenna port numbers (or indexes) 7 to 12, and the UE-specific reference signal port may be transmitted from RS positions that do not overlap with other reference signals.

Additionally, in the LTE-A system, an RS that is related to a feedback of a Channel State Information (CSI), such as CQI/PMI/RI, for a new antenna port may be separately defined as a CSI-RS. For example, a CSI-RS port, which supports a maximum of 8 transmission antenna ports, may be defined as antenna port numbers (or indexes) 15 to 22, and the CSI-RS port may be transmitted from RS positions that do not overlap with other reference signals.

Coordinated Multi-Point (CoMP)

According to the improved system performance requirements of the 3GPP LTE-A system, CoMP transmission/reception technology (also referred to as co-MIMO, collaborative MIMO or network MIMO, and so on) is being proposed. The CoMP technology may increase the performance of the UE, which is located on a cell-edge, and may also increase an average sector throughput.

Generally, in a multi-cell environment having a frequency reuse factor of 1, the performance and average sector throughput of the UE, which is located on the cell-edge, may be reduced due to Inter-Cell Interference (ICI). In order to reduce the ICI, the conventional LTE system uses a method of enabling the UE, which is located on the cell-edge, to have appropriate throughput performance in an environment that is limited due to the interference by using a simple passive method, such as fractional frequency reuse (FFR), through the UE-specific power control. However, instead of decreasing the use of frequency resources per cell, it may be preferable to reduce the ICI or to have the UE reuses the ICI as a wanted signal. In order to accomplish the above-described object, a CoMP transmission scheme (or method) may be applied.

The CoMP method that can be applied to the downlink may be broadly divided into a joint processing (JP) method (or scheme) and a coordinated scheduling/beamforming (CS/CB) method.

In the JP method, each point (base station) of a CoMP coordination (or cooperation) unit may use data. The CoMP coordination unit refers to a set (or group) of base stations used in the CoMP method. The JP method may be divided into a Joint Transmission method and a Dynamic cell selection method.

The joint transmission method refers to a method for simultaneously transmitting a PDSCH from multiple points (a part of the CoMP coordination unit or the whole CoMP coordination unit). More specifically, the data being transmitted to a single user equipment (UE) may be simultaneously transmitted from multiple transmission points. According to the joint transmission method, the quality of a received signal may be coherently or non-coherently enhanced, and, interference with another user equipment may be actively cancelled (or eliminated).

The dynamic cell selection method refers to a method for transmitting a PDSCH from one point (of the CoMP coordination unit) at a time. More specifically, the data being transmitted to a single UE at a specific time points is transmitted from a single point, and data transmission is not performed to the corresponding user equipment (UE) at the same time point from other points within the coordination unit, and the point from which the data are being transmitted to the corresponding user equipment may be dynamically selected.

Meanwhile, according to the CS/CB method, the CoMP coordination units may cooperatively perform beamforming of the data transmission to a single UE. Herein, although the data are transmitted only from a serving cell, user scheduling/beamforming may be determined by the coordination of the cells of the corresponding CoMP unit.

Meanwhile, in an uplink, coordinated multi-point reception refers to the reception of a signal transmitted by a coordination of multiple points, which are geographically spaced apart from one another. The CoMP method that can be applied to the uplink may be divided into Joint Reception (JR) and coordinated scheduling/beamforming (CS/CB).

The JR scheme (or method) indicates that a signal, which is transmitted through the PUSCH, is received by multiple reception points, and the CS/CB scheme. (or method) indicates that the PUSCH is received only from one point and that user scheduling/beamforming is determined by the coordination of the cells of the CoMP unit.

When using such CoMP system, the user equipment may commonly receive data support from Multi-cell base stations. Additionally, by simultaneously supporting one or more user equipment by using the same Radio Frequency Resource, each base station may enhance the system performance. Moreover, based upon channel state information between the base station and the user equipment, the base station may also perform a Space Division Multiple Access (SDMA) method.

In the CoMP system, a serving base station and one or more cooperative base stations are connected to a scheduler through a Backbone Network. The scheduler may be operated by receiving feedback of channel information related to a channel state between each user equipment and cooperative base station, wherein the channel state is measured by each base station. For example, the scheduler may schedule information for cooperative MIMO operations for the serving base station and one or more cooperative base stations. More specifically, the scheduler may directly send out directions on the cooperative MIMO operations to each base station.

As described above, the CoMP system may refer to a system operating as a virtual MIMO system by grouping multiple cells to a single group, and, basically, a communication method of a MIMO system using multiple antennae may be applied to the CoMP system.

Sounding Reference Signal (SRS)

A Sounding Reference Signal (SRS) is generally used for allowing the base station to measure channel quality in order to perform frequency-selective scheduling within the uplink, and the SRS is not associated with uplink data and/or control information transmission. However, the present invention will not be limited this, and the SRS may be used for the purpose of enhanced power control, or the SRS may be used for the purpose of supporting of diverse start-up functions of user equipment, which have not been recently scheduled. Examples of the start-up functions may include, for example, initial Modulation and Coding Scheme (MCS), initial power control for data transmission, timing advance, and frequency semi-selective scheduling (scheduling for selectively allocating frequency resources in a first slot of a subframe and pseudo-randomly hopping to another frequency in a second slot).

Additionally, the SRS may be used for performing downlink channel quality measurement under the assumption that the radio channel is reciprocal between the uplink and downlink. This assumption is particularly valid in a TDD system, wherein the same frequency band is shared between the uplink and the downlink, and wherein the uplink and downlink are differentiated from one another in the time domain.

The subframe through which the SRS is being transmitted by a specific UE within the cell is indicated by cell-specific broadcast signaling. 4-bit cell-specific 'SrsSubframeConfiguration' parameter indicates 15 possible configurations of the subframe, through which the SRS can be transmitted within each radio frame. By such configurations, adjustment flexibility for adjusting an SRS overhead in accordance with a network arrangement scenario may be provided. The remaining one (sixteenth) configuration of the parameters indicates a switch-off of the SRS transmission within the cell and may be generally suitable for a serving cell serving high-rate UEs.

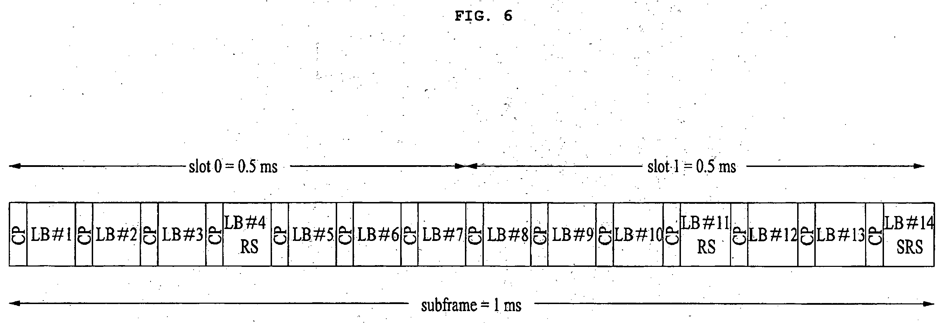

As shown in Fig. 6, the SRS may be transmitted on a last SC-FDMA symbol of the subframe. Accordingly, the SRS and an uplink DeModulation Reference Signal (DMRS) are located on different SC-FDMA symbols. PUSCH data transmission is not authorized to be performed on the SC-FDMA symbol, which is designated for SRS transmission. More specifically, the PUSCH is mapped on a resource element with the exception for an SRS transmission SC-FDMA symbol, and this may be referred to as rate matching of the PUSCH. Even when an overhead of the SRS is at its highest level (*i.e.*, when SRS transmission symbols exist in all subframes), the overhead does not exceed approximately 7%.

Each of the SRS symbols is generated by a basic sequence (random sequence or Zadoff-Ch (ZC)-based sequence set) with respect to a given time unit and frequency band, and all UEs within the cell use the same basic sequence. At this point, the SRS transmission from the multiple user equipments within the cell at the same time unit and the same frequency band is orthogonally distinguished by different cyclic shifts of the base sequence, which is allocated to the multiple UEs. Although the SRS sequences of different cells can be distinguished by allocating different basic sequences to respective cells, the orthogonality between the different basic sequences is not ensured.

Meanwhile, when the user equipment intends to transmit an uplink data channel (*e.g.*, PUSCH), a number of SC-FDMA symbols carrying the PUSCH in one subframe is required to be correctly determined. For example, in case a last SC-FDMA symbol is being used for the SRS transmission in a subframe having an SRS transmission set up therein, a number of SC-FDMA symbols excluding, the last SC-FDMA symbol may be determined to be used for the PUSCH transmission, and PUSCH rate matching may be performed in accordance with the determined number of SC-FDMA symbols.

According to the wireless communication system that is currently defined (e.g., 3GPP LTE/LTE-A systems), a number of SC-FDMA symbols carrying the PUSCH in one subframe is expressed as $N_{symb}^{PUSCH}$ (or $N_{symb}^{PUSCH-initial}$). Contents of the decision of the $N_{symb}^{PUSCH}$ (or $N_{symb}^{PUSCH-initial}$) value is determined in association with channel coding operations for control information (*e.g.*, RI, CQI, PMI, HARQ ACK/NACK, and so on), which is being transmitted over the PUSCH within the 3GPP LTE/LTE-A systems.

For example, in case CQI and/or PMI bits are being transmitted over the PUSCH along with the data, the $N_{symb}^{PUSCH}$ value may be taken into consideration when determining the number of modulation signals, which are coded per layer with respect to the CQI and/or PMI bits. $N_{symb}^{PUSCH}$ is defined as a number of SC-FDMA symbols per subframe for a current PUSCH transmission, and the value may be given as shown below in Equation 1.

[Equation 1]

$$N_{symb}^{PUSCH} = \left(2 \cdot \left(N_{symb}^{UL} - 1\right) - N_{SRS}\right)$$

In Equation 1, $N_{symb}^{UL}$ represents a number of SC-FDMA symbols (*e.g.*, 7 in case of a normal CP) within an uplink slot, $N_{SRS}$ indicates a number of SC-FDMA symbols (e.g., 0 or 1) being used for SRS transmission within a subframe.

With the exception for one SC-FDMA symbol for an uplink DMRS in each slot, and the exception for $N_{SRS}$ number of SC-FDMA symbols for the SRS within one subframe including 2 slots, Equation 1 may signify that the remaining SC-FDMA symbols correspond to the number of SC-FDMA symbols that can be used for the PUSCH in a subframe.

Herein, when $N_{SRS}$ is given the value of 1, this may correspond to a case when, in the current subframe (or initial transmission), the user equipment (UE) transmits a PUSCH and an SRS from the same subframe, or a case when PUSCH resource allocation for the current subframe (or initial transmission) overlaps at least partially with a cell-specific SRS subframe and bandwidth configurations subframe, or a case when the current subframe (or a subframe for the initial transmission) corresponds to a UE-specific Type-1 SRS subframe (*i.e.*, an aperiodic SRS transmission subframe). In other cases, the $N_{SRS}$ value may be equal to 0.

Alternatively, in case HARQ ACK/NACK bits or RI bits are transmitted along with data over the PUSCH, the $N_{symb}^{PUSCH-initial}$ value may be taken into consideration when determining the number of modulation signals, which are coded per layer with respect to the HARQ ACK/NACK bits or RI bits. $N_{symb}^{PUSCH-initial}$ is defined as a number of SC-FDMA symbols per subframe for an initial PUSCH transmission, and the value may be given in Equation 1 as an equivalent of $N_{symb}^{PUSCH}$ being replaced with $N_{symb}^{PUSCH-initial}$.

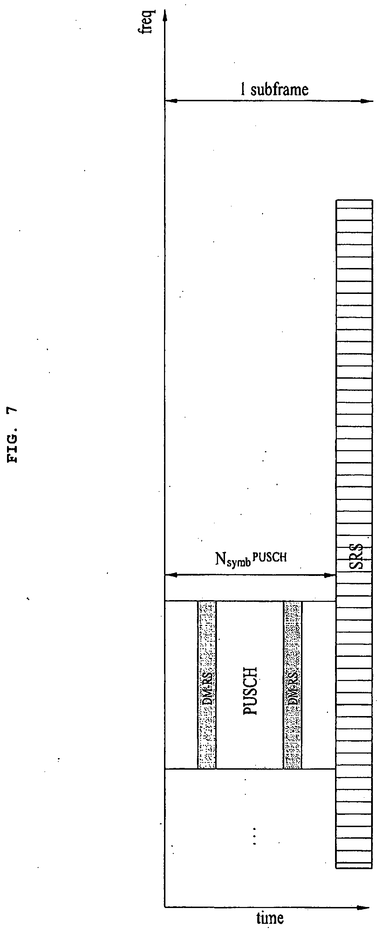

Fig. 7 illustrates a drawing for describing a number of PUSCH transmission SC-FDMA symbols in an uplink subframe. As shown in Fig. 7, in case an SRS transmission exists in a last SC-FDMA symbol of a subframe, $N_{symb}^{PUSCH}$ (or $N_{symb}^{PUSCH-initial}$ ), which corresponds to a number of PUSCH transmission SC-FDMA symbols, may be determined as a value excluding a number of SRS transmission SC-FDMA symbols (*e.g.*, 1) and excluding a number of DMRS transmission SC-FDMA symbols (*e.g.*, 2) from a total number of SC-FDMA symbols within a subframe.

Reference may be made to passage 5.2.2.6 of the standard document 3GPP TS 36.212 for more details on the $N_{symb}^{PUSCH}$ (or $N_{symb}^{PUSCH-initial}$).

As described above, in determining the $N_{symb}^{PUSCH}$ (or $N_{symb}^{PUSCH-initial}$) value, the $N_{SRS}$ value according to the cell-specific SRS configuration influences the decision. For example, as shown in the example of Fig. 7, when the current frame, through which the user equipment intends to transmit the PUSCH, corresponds to a subframe that is configured to cell-specifically perform (*i.e.*, perform commonly to all user equipments within the cell) SRS transmission, $N_{SRS=1}$ is given, and the $N_{symb}^{PUSCH}$ value may be given accordingly. Herein, the subframe having SRS transmission cell-specifically configured therein may be determined in accordance with cell-specific SRS subframe configuration information, which is semi-statically given through upper layer (*e.g.*, RRC (Radio Resource Control)) signaling.

More specifically, $T_{SFC}$, which corresponds to a cell-specific subframe configuration cycle period (or interval) for SRS transmission, and $\Delta_{SFC}$, which corresponds to a cell-specific subframe offset, may be given as shown below in Table 1 and Table 2. Table 1 shown below corresponds to a Type 1 (*i.e.*, FDD) frame structure, and Table 2 shown below corresponds to a Type 2 (*i.e.*, TDD) frame structure. Additionally, in Table 1 and Table 2, the SubframeConfig parameter is given by an upper layer.

[Table 1]

| srs-SubframeConfig | Binary | Configuration Period $T_{SFC}$ (subframes) | Transmission offset $\Delta_{SFC}$ (subframes) |
|---|---|---|---|
| 0 | 0000 | 1 | {0} |
| 1 | 0001 | 2 | {0} |
| 2 | 0010 | 2 | {1} |
| 3 | 0011 | 5 | {0} |
| 4 | 0100 | 5 | {1} |
| 5 | 0101 | 5 | {2} |
| 6 | 0110 | 5 | {3} |
| 7 | 0111 | 5 | {0,1} |
| 8 | 1000 | 5 | {2,3} |
| 9 | 1001 | 10 | {0} |
| 10 | 1010 | 10 | {1} |
| 11 | 1011 | 10 | {2} |
| 12 | 1100 | 10 | {3} |
| 13 | 1101 | 10 | {0,1,2,3,4.6,8} |
| 14 | 1110 | 10 | {0.1.2.3.4.5,6,8} |
| 15 | 1111 | reserved | Reserved |

[Table 2]

| srs-SubframeConfig | Binary | Configuration Period $T_{SFC}$ (subframes) | Transmission offset $\Delta_{SFC}$ (subframes) |
|---|---|---|---|
| 0 | 0000 | 5 | {1} |
| 1 | 0001 | 5 | {1, 2} |
| 2 | 0010 | 5 | {1, 3} |
| 3 | 0011 | 5 | {1, 4} |
| 4 | 0100 | 5 | {1, 2, 3} |
| 5 | 0101 | 5 | {1, 2, 4} |
| 6 | 0110 | 5 | {1, 3, 4} |
| 7 | 0111 | 5 | {1, 2, 3, 4} |
| 8 | 1000 | 10 | {1, 2, 6} |
| 9 | 1001 | 10 | {1, 3, 6} |
| 10 | 1010 | 10 | {1, 6, 7} |
| 11 | 1011 | 10 | {1, 2, 6, 8} |
| 12 | 1100 | 10 | {1, 3, 6, 9} |
| 13 | 1101 | 10 | (1, 4, 6, 7} |
| 14 | 1110 | reserved | Reserved |

(continued)

| srs-SubframeConfig | Binary | Configuration Period $T_{SFC}$ (subframes) | Transmission offset $\Delta_{SFC}$ (subframes) |
|---|---|---|---|
| 15 | 1111 | reserved | Reserved |

The SRS subframe may be determined as a subframe satisfying Equation 2 shown. below.

[Equation 2]

$$\lfloor n_s / 2 \rfloor \bmod T_{SFC} \in \Delta_{SFC}$$

In Equation 2, $n_s$ indicates a slot index. Herein, $\lfloor A \rfloor$ signifies a maximum integer that does not exceed A. Additionally, $T_{SFC}$ and $\Delta_{SFC}$ may be determined by Table 1 or Table 2. Meanwhile, in the Type 2 *(i.e.,* TDD) frame structure, the SRS may only be transmitted from a configured uplink subframe or UpPTS.

For example, when it is assumed that the system operates on FDD and that srs-SubframeConfig = 3 is given through upper layer signaling, in Table 1, Configuration Period $T_{SFC}$ = 5 (subframes) and Transmission offset $\Delta_{SFC}$ = 0 (subframes) are determined. Therefore, a cell-specific SRS subframe is configured at a 5 subframe cycle period (or interval), and a starting point of the cell-specific SRS subframe is set up as a subframe having an offset of 0 starting from a predetermined reference time point. Meanwhile, in Table 1, when srs-SubframeConfig = 4 is given, since $T_{SFC}$ = 5 and $\Delta_{SFC}$ = 1, although the cell-specific SRS subframe cycle period is: identical to that of the case when srs-SubframeConfig = 3 is given, a different starting point is given, and, therefore, the cell-specific SRS subframe maybe configured to avoid overlapping.

Reference may be made to passage 5.5.3.3 of the standard document 3GPP TS 36.211 for more details on SRS subframe configuration.

<u>Solution for Enhanced SRS Configuration</u>

In case cooperative (or coordinated) communication is performed between multiple points in a multiple point transmission/reception environment, when the user equipment intends to transmit a PUSCH, the present invention proposes a solution for determining $N_{symb}^{PUSCH}$ or $N_{symb}^{PUSCH-initial}$ *(i.e.,* a number of SC-FDMA symbols carrying the PUSCH in one subframe).

Additionally, in determining the $N_{symb}^{PUSCH}$ or $N_{symb}^{PUSCH-initial}$, since SRS related configurations *(e.g.,* $N_{SRS}$ that is being determined in accordance with a cell-specific SRS configuration) are taken into consideration, an SRS configuration solution for multiple point cooperative communication operations is being proposed.

In the following description, although the term Transmission Point (TP) or Reception Point (RP) is typically used for convenience in the description, this term may also be replaced with other terms, such as remote radio head (RRH), base station, eNB, Relay, and so on.

Additionally, although the following examples will be mostly described under the assumption of CoMP operations, wherein two points (or eNBs) are involved, the scope of the present invention will not be limited to this, and, therefore, the principles proposed in the present invention may also be equally applied to other cooperative (or coordinated) communication having two or more points (or eNBs) involved therein.

In the conventional wireless communication system, one cell may commonly *(i.e.,* cell-specifically) provide one cell-specific SRS subframe configuration to user equipments within the corresponding cell through RRC signals. Accordingly, when performing the PUSCH transmission, each user equipment within the corresponding cell verifies whether or not the subframe, which is scheduled to perform PUSCH transmission, overlaps with the cell-specific SRS subframe, and, in case the subframes overlap, the PUSCH may be transmitted by applying rate matching that does hot map PUSCH data to a last SC-FDMA symbol of the corresponding subframe. Additionally, since the PUSCH that is transmitted by the user equipment is generally directed toward the eNB of a serving cell, it was sufficient to perform operations based only upon cell-specific SRS subframe configurations, which were configured by the eNB of the serving cell.

Meanwhile, in an uplink CoMP environment that is supported by an evolved wireless communication system, an uplink signal that is transmitted by the user equipment may be directed toward multiple RPs. Herein, in case the cell-specific SRS subframe configurations of the serving cell and the neighboring cell are different from one another, there exists a possibility of a collision between the PUSCH transmission of the CoMP user equipment and SRS transmission from user equipments belonging to the neighboring cell. In case a collision occurs, in addition to a problem of the PUSCH demodulation performance of the CoMP user equipment being degraded, the SRS transmission from neighboring cell user equipments may significantly interfere with the PUSCH transmission of the CoMP user equipment. And, in this case, since the frequency-selective scheduling, and so on, which are based upon the SRS, cannot be correctly performed, the overall network performance may be degraded.

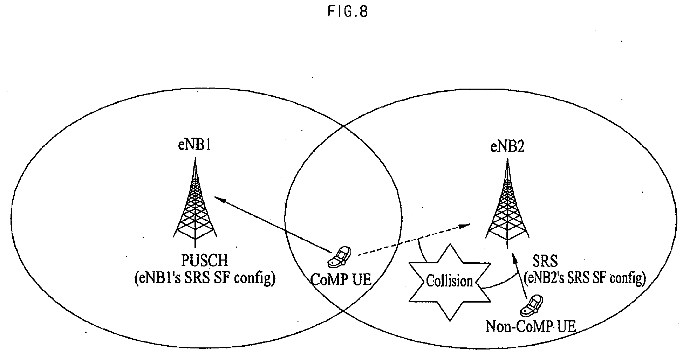

Fig. 8 illustrates an exemplary uplink CoMP operation.

In the example shown in Fig. 8, the CoMP user equipment (CoMP UE) may transmit the PUSCH based upon a cell-specific SRS subframe configuration of eNB1 (eNB1's SRS SF config). More specifically, depending upon whether or not a subframe corresponds to the subframe cell-specifically configured as an SRS subframe by the eNB1 (*i.e.*, an SRS subframe of eNB1), the PUSCH transmission may be performed by determining whether or not to map the PUSCH from the last SC-FDMA symbol. Additionally, the PUSCH transmission of the CoMP UE may be directed toward eNB1 and/or eNB2. Alternatively, even in case the PUSCH transmission of the CoMP UE is directed toward eNB1, the PUSCH transmission of the CoMP UE, which is located at the cell boundary of eNB1 and eNB2, may also reach eNB2.

Meanwhile, in accordance with a cell-specific SRS subframe configuration of eNB2 (eNB2's SRS SF config), a non-CoMP UE may transmit an SRS to a last SC-FDMA symbol from an SRS subframe of eNB2.

Herein, the SRS subframe configurations of eNB1 and eNB2 may be different from one another. A situation, wherein a specific subframe does not correspond to an SRS subframe eNB1 but corresponds to an SRS subframe of eNB2, may be assumed. In this case, while a CoMP UE maps and transmits a PUSCH to a last SC-FDMA symbol of the corresponding subframe, a non-CoMP UE transmits an SRS to the last SC-FDMA symbol of the corresponding subframe. In this case, the PUSCH from the CoMP UE eventually collides with the SRS from the non-CoMP UE, thereby causing eNB2 to be incapable of correctly performing demodulation on the PUSCH from the CoMP UE or to be incapable of correctly receiving the SRS from the non-CoMP UE. Thus, a problem may occur in that an uplink channel state may be incorrectly determined.

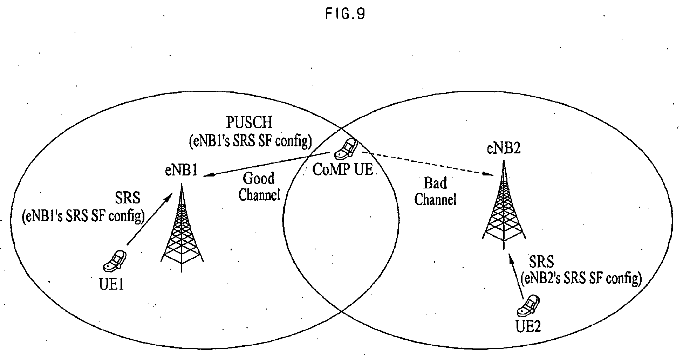

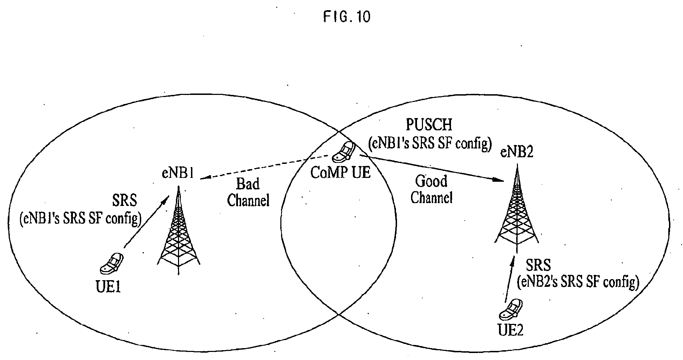

Fig. 9 and Fig. 10 respectively illustrate other exemplary uplink CoMP operations.

Fig. 9 and Fig. 10 respectively show a case when the channel quality to one specific RP among multiple RPs is good whereas the channel quality to another RP is poor (or deep fading). For example, in light of the CoMP UE, Fig. 9 illustrates an exemplary situation, wherein the channel quality to eNB1 is good whereas the channel quality to eNB2 is poor, and Fig. 10 illustrates an exemplary situation, wherein the channel quality to eNB1 is poor whereas the channel quality to eNB2 is good.

As shown in Fig. 9 and Fig. 10, the PUSCH transmission of the CoMP UE may influence the uplink transmission of both the non-CoMP UE1 and non-CoMP UE2, each belonging to the respective neighboring eNBs. For example, in case UE1 or UE2 transmits an SRS, any change of a collision occurring between the SRS transmission and the PUSCH transmission of the CoMP UE shall be taken into consideration. Additionally, when UE1 or UE2 transmits the PUSCH at the same time in accordance with the CoMP UE and the uplink MU-MIMO scheme, an orthogonality between the uplink DMRSs for PUSCH demodulation (*e.g.*, between the DMRS of UE1 and the DMRS of the CoMP UE, or between the DMRS of UE2 and the DMRS of the CoMP UE) shall be taken into consideration.

As shown in the example of Fig. 9, when the channel status between the CoMP UE and eNB2 is bad (or poor), the PUSCH transmission of the CoMP UE may not cause significant influence on the SRS transmission from UE2. Accordingly, in performing SRS transmission of the CoMP UE, collision with the SRS transmission of UE2 is not required to be taken into consideration, nevertheless, collision with the SRS transmission of UE2 should be taken into consideration. Accordingly, the CoMP UE may be configured so that the PUSCH can be transmitted in accordance with the SRS subframe configuration of eNB1. In this case, even if the SRS subframe configurations that are respectively considered by the CoMP UE and UE2 are different from one another, as described above, since the PUSCH transmission of the CoMP UE does not cause interference with the SRS transmission of UE2 due to the poor channel state directed to eNB2, a critical problem may not occur. Meanwhile, since the CoMP UE and UE1 operate in accordance with the same cell-specific SRS configuration, and, accordingly, since PUSCH transmission is performed from a subframe, through which UE1 performs SRS transmission, without having the CoMP UE map the PUSCH to the last SC-FDMA symbol, collision between the PUSCH of the CoMP UE and the SRS of UE1 may be avoided. Additionally, in the case shown in Fig. 9, in case of considering uplink MU-MIMO of CoMP UE and UE1, it is preferable to generate PUSCH DMRS base sequences of the CoMP UE and UE1 equally based upon a cell identifier (cell ID) of eNB2. This is because the orthogonality between the DMRS of each UE can be ensured only when the DMRS base sequences of each UE participating in the MU-MIMO are generated based upon the same cell ID.

Meanwhile, with an elapse of time, or due to other factors, as opposed to the case shown in Fig. 9, as shown in Fig. 10, the channel between CoMP UE and eNB1 may become poor, and the channel state between the CoMP UE and UE2 may become good. In this case, the PUSCH transmission of the CoMP UE may not cause significant influence on the SRS transmission from UE1. Accordingly, the CoMP UE may be configured so that the PUSCH can be transmitted in accordance with the SRS subframe configuration of eNB2. In this case, even if the SRS subframe configurations that are respectively considered by the CoMP UE and UE1 are different from one another, as described above, since the PUSCH transmission of the CoMP UE does not cause interference with the SRS transmission of UE1 due to the poor channel state directed to eNB1, a critical problem may not occur. Meanwhile, since the CoMP UE and UE2 operate in accordance with the same cell-specific SRS configuration, and, accordingly, since PUSCH transmission is performed from a subframe, through which UE2 performs SRS transmission, without having the CoMP UE map the PUSCH to the last SC-FDMA symbol, collision between the PUSCH of the CoMP UE and the SRS of UE2 may be avoided. Additionally, in the case shown in Fig. 10, in case of considering uplink MU-MIMO of CoMP UE and UE2, it is preferable to generate PUSCH DMRS base sequences of the CoMP UE and UE2 equally based upon a cell identifier (cell ID) of eNB2.

As described above, in a CoMP situation, a UE should adequately perform PUSCH rate matching in order to reduce/avoid collision/interference between a PUSCH transmission of a specific UE and an SRS transmission of another UE, and, in order to do so, an SRS subframe configuration that should be considered by the CoMP UE is required to be clearly determined, and this will hereinafter be described in detail in accordance with the following exemplary embodiments of the present invention.

Embodiment 1

The first embodiment of the present invention relates to a solution for notifying the UE which one of the multiple cell-specific SRS subframe configurations is to be taken into consideration when performing the PUSCH transmission. Based upon the one or more indicated cell-specific SRS subframe configurations, the UE may decide whether or not to perform rate matching on the last SC-FDMA symbol in the PUSCH transmission subframe, and, then, the UE may perform the PUSCH transmission accordingly.

More specifically, for each RP participating in the CoMP, a cell-specific SRS subframe configuration may be independently assigned. In addition to the information on the cell-specific SRS subframe configuration of a serving RP, information on cell-specific SRS subframe configuration(s) of neighboring RP(s), may be semi-statically notified to the CoMP UE as multiple cell-specific SRS subframe configuration information via upper layer signaling. Additionally, when providing an uplink grant (UL grant) including scheduling information for a PUSCH transmission to the CoMP UE through a downlink control channel (e.g., PDCCH), in determining a number of SC-FDMA symbols of a subframes, through which the PUSCH is transmitted, it may be dynamically indicated which cell-specific subframe configuration, among the multiple cell-specific SRS subframe configurations, the decision should be based upon.

Additionally, information indicating which cell-specific SRS subframe configuration is being applied in a DCI (hereinafter referred to as an uplink-related DCI) including the uplink grant may reuse a field, which is defined in the conventional uplink-related DCI, or may be used by defining a new field. For example, the cell-specific SRS subframe configuration indication information may also be joint coded with a field indicating information related to PUSCH DMRS base sequence generation.

For example, a "Cyclic Shift for DM RS and OCC (Orthogonal Cover Code) index" field , which is included in an uplink-related DCI (*e.g.*, DCI Format 0 or 4), may be defined to have the size of 3 bits, and a cyclic shift value of a DMRS sequence and an OCC may be determined based upon this field value. Additionally, the Cyclic Shift for DMRS and OCC index field may also indicate a seed value (*e.g.*, a cell ID or a virtual cell ID), which is used for generating the base sequence of a DMRS. Alternatively, information on a factor that is used for generating the DMRS base sequence may also be indicated through a field (e.g., DMRS configuration field) other than the Cyclic Shift for DMRS and OCC index field.

Such factor that is used for generating the base sequence of the DMRS may be interpreted as a factor indicating a specific cell (or a virtual cell or RP), and it is proposed in the present invention that a cell-specific SRS subframe configuration of the corresponding specific cell (or virtual cell or RP) is indicated by using this factor. More specifically, a specific field within the uplink-related DCI may operate as a field simultaneously indicating a DMRS configuration and a cell-specific SRS subframe configuration. For example, a DMRS configuration field within the uplink-related DCI may be used for the purpose of providing information on the DMRS configuration (e.g., a factor that is used for generating the base sequence of the DMRS) and indicating one of multiple cell-specific SRS subframe configurations at the same time.

Additionally, the CoMP UE may be provided with the information on multiple candidates of the cell-specific SRS subframe configuration via upper layer signaling. Moreover, whether or not the CoMP UE will be operated by applying the multiple cell-specific SRS subframe configurations all in a union format may also be configured in the corresponding CoMP UE via upper layer signaling.

In case the CoMP UE is configured to be provided with the information on the multiple cell-specific SRS subframe configuration candidates, yet not configured to apply the union, depending upon what is indicated by the specific field of the uplink-related DCI, the CoMP UE may be operated by applying one of the multiple cell-specific SRS subframe configuration candidates.

In case the CoMP UE is configured to be provided with the information on the multiple cell-specific SRS subframe configuration candidates and to apply the union, the corresponding CoMP UE may be operated to interpret all of the SRS subframes corresponding to all of the cell-specific SRS subframe configurations as a subframe performing PUSCH rate matching (*i.e.*, a subframe having the PUSCH mapped thereto with the exception for the last SC-FDMA symbol). In this case, a solution (or method) for dynamically indicating a cell-specific SRS subframe configuration through the uplink-related DCI may not be applied.

Alternatively, although the information on whether or not the union of the multiple cell-specific SRS subframe, configurations is to be applied may be provided to the UE via upper layer signaling, the information may also be provided to the UE through a specific field of the uplink-related DCI.

Additionally, in order to provide multiple cell-specific SRS subframe configurations to one UE, for example, in case of an FDD system, multiple states among the 16 states shown in Table 1 may be configured, and, in case of a TDD system, multiple states among the 16 states shown in Table 2 may be configured. However, Table 1 and Table 2, which are shown above, are merely exemplary, and multiple UE-specific SRS subframe configurations may also be notified to one UE by newly configuring multiple candidates of the cell-specific SRS subframe configuration (*i.e.*, by preparing a corrected (or amended) format of Table 1 and Table 2, which are shown above) and by indicating multiple states among the newly configured states.

Moreover, although it is defined in the conventional wireless communication system that one cell-specific SRS subframe configuration is assigned to one cell, in the present invention, one RP may also be assigned with multiple cell-specific SRS suframe configurations. In this case, also, multiple states of Table 1 and Table 2 (or the corrected format) may be applied as the cell-specific SRS subframe configurations related to one RP.

Detailed examples indicating one or more cell-specific SRS subframe configurations, which are to be applied by the UE through a specific bit field (*e.g.*, SRS subframe configuration field) of the uplink-related DCI, among the multiple cell-specific SRS subframe configurations configured in the UE, will hereinafter be described.

Table 3 shown below shows an example of a 1-bit SRS subframe configuration field in an uplink-related DCI format.

[Table 3]

| Value of SRS subframe configuration field | Description |
| --- | --- |
| '0' | The 1st cell-specific SRS configuration among multiple SRS configurations |
| '1' | The 2nd cell-specific SRS configuration among multiple SRS configurations |

The example shown in Table 3 may correspond to a case when two cell-specific SRS subframe configuration candidates (*e.g.*, two cell-specific SRS subframe configuration candidates, which are configured by upper layer signaling) exist for one UE. When the SRS subframe configuration field value is equal to '0', the number of SC-FDMA symbols for the PUSCH transmission may be determined based upon a first configuration, among the two cell-specific SRS subframe configurations, and, when the SRS subframe configuration field value is equal to '1', the number of SC-FDMA symbols for the PUSCH transmission may be determined based upon a second configuration. After determining one cell-specific SRS subframe configuration, a detailed method for determining the number of SC-FDMA symbols for the PUSCH transmission for the determined cell-specific SRS subframe configuration may follow the description related to Equation 1 or Equation 2, which are shown above.

Table 4 and Table 5, which are shown below, respectively show examples of a 2-bit SRS subframe configuration field in an uplink-related DCI format.

[Table 4]

| Value of SRS subframe configuration field | Description |
| --- | --- |
| '00' | The 1st cell-specific SRS configuration among multiple SRS configurations |
| '01' | The 2nd cell-specific SRS configuration, among multiple SRS configurations |
| '10' | Union of the 1st cell-specific SRS configuration and the 2nd cell-specific SRS configuration |
| '11' | Reserved |

[Table 5]

| Value of SRS subframe configuration field | Description |
|---|---|
| '00' | The 1st cell-specific SRS configuration among multiple SRS configurations |
| '01' | The 2nd cell-specific SRS configuration among multiple SRS configurations |
| '10' | The 3rd cell-specific SRS configuration among multiple SRS configurations |
| '11' | Union of the 1st cell-specific SRS configuration, the 2nd cell-specific SRS configuration and the 3rd cell-specific SRS configuration |

The example shown in Table 4 may correspond to a case when two cell-specific SRS subframe configuration candidates (e.g., two cell-specific SRS subframe configuration candidates, which are configured by upper layer signaling) exist for one UE. When the SRS subframe configuration field value is equal to '00', the number of SC-FDMA symbols for the PUSCH transmission may be determined based upon a first configuration, among the two cell-specific SRS subframe configurations, and, when the SRS subframe configuration field value is equal to '01', the number of SC-FDMA symbols for the PUSCH transmission may be determined based upon a second configuration. Additionally, in case the SRS subframe configuration field value is equal to '10', the number of SC-FDMA symbols for the PUSCH transmission may be determined based upon a union of SRS subframes, which are determined based upon SRS subframe cycle periods (or intervals) and offsets for the first and second cell-specific SRS subframe configuration. For example, when an SRS subframe that is determined by at least one cell-specific SRS subframe configuration overlaps with a PUSCH transmission subframe of the UE, value settings are set to $N_{SRS} = 1$, and PUSCH transmission may be performed by performing rate matching so that the PUSCH cannot be mapped to the last SC-FDMA symbol of the corresponding subframe.

The example shown in Table 5 may correspond to a case when three cell-specific SRS subframe configuration candidates (e.g., three cell-specific SRS subframe configuration candidates, which are configured by upper layer signaling) exist for one UE. When the SRS subframe configuration field value is equal to '00', the number of SC-FDMA symbols for the PUSCH transmission may be determined based upon a first configuration, among the three cell-specific SRS subframe configurations, when the SRS subframe configuration field value is equal to '01', the number of SC-FDMA symbols for the PUSCH transmission may be determined based upon a second configuration, and when the SRS subframe configuration field value is equal to '01', the number of SC-FDMA symbols for the PUSCH transmission may be determined based upon a third configuration. Additionally, in case the SRS subframe configuration field value is equal to '11', the number of SC-FDMA symbols for the PUSCH transmission may be determined based upon a union of SRS subframes, which are determined based upon SRS subframe cycle periods (or intervals) and offsets for the first, second, and third cell-specific SRS subframe configuration.

In Tables 3 to 5, although examples of the SRS subframe configuration field of the uplink-related DCI having the size of 1-bit or 2-bits is described, the present invention will not be limited only to this. For example, the size of the SRS subframe configuration field may be defined to be equal to 3-bits or more. In this case, a larger number of cell-specific SRS subframe configuration candidates may be supported, and bit encoding process of the SRS subframe configuration field may be performed, so that diverse combinations of one or more cell-specific SRS subframe configurations, which are dynamically selected from the larger number of configuration candidates, can be indicated. Table 6 shown below shows an example of a 3-bit SRS subframe configuration field in the uplink-related DCI.

[Table 6]

| Value of SRS subframe configuration field | Description |
|---|---|
| '000' | The 1st cell-specific SRS configuration among multiple SRS configurations |
| '001' | The 2nd cell-specific SRS configuration among multiple SRS configurations |
| '010' | The 3rd cell-specific SRS configuration among multiple SRS configurations |
| '011' | Union of the 1st cell-specific SRS configuration and the 2nd cell-specific SRS configuration |
| '100' | Union of the 1st cell-specific SRS configuration and the 3rd cell-specific SRS configuration |

(continued)

| Value of SRS subframe configuration field | Description |
|---|---|
| '101' | Union of the 2nd cell-specific SRS configuration and the 3rd cell-specific SRS configuration |
| '110' | Union of the 1st cell-specific SRS configuration the 2nd cell-specific SRS configuration and the 3rd cell-specific SRS configuration |
| '111' | Reserved |

The scope of the present invention will not be limited only to the example given in Tables 3 to 6, and the number of cell-specific SRS subframe configuration candidates, which are configured for one UE, will not be limited. More specifically, according to the present invention, information on four or more cell-specific SRS subframe configuration candidates is provided to the UE via upper layer signaling, and operation may be performed, so that the number of PUSCH transmission SC-FDMA symbols can be determined based upon one or more cell-specific SRS subframe configurations, which are dynamically indicates by a specific field of the uplink-related DCI among the configuration candidates. Additionally, the scope of the present invention will not be limited only to the examples presented above, and the scope of the present invention will include diverse bit encoding methods indicating one or more cell-specific SRS subframes, among two or more cell-specific SRS subframe configuration candidates, by modification, extension or combination of the Tables 3 to 6 shown above.

Additionally, the uplink-related DCI may correspond to the conventionally defined DCI Format 0 or 4, and the uplink-related DCI may also correspond to a corrected DCI format or a newly defined DCI format (e.g., a new DCI format X including uplink grant information scheduling PUSCH transmission).

When one or more DMRS configurations that are to be applied by the UE are indicated, among multiple DMRS configuration candidates, through a specific bit field (e.g., DMRS configuration field) of the uplink-related DCI, examples of the present invention for determining one of more cell-specific SRS subframe configurations that can be deduced (or implicitly indicated) from one or more of the indicated DMRS configurations will hereinafter be described.

Table 7 shown below shows an example of a 1-bit DMRS configuration field in an uplink-related DCI format.

[Table 7]

| Value of DMRS configuration field | Description |
|---|---|
| '0' | The 1st DMRS configuration among multiple DMRS configurations |
| '1' | The 2nd DMRS configuration among multiple DMRS configurations |

The example shown in Table 7 may correspond to a case when two PUSCH DMRS configuration candidates (e.g., two PUSCH DMRS configuration candidates, which are configured by upper layer signaling) exist for one UE. The two DMRS configuration candidates, for example, may each correspond to a different base sequence set, which is respectively generated based upon two different cell IDs. When the DMRS configuration field value is equal to '0', the PUSCH DMRS sequence may be generated based upon a first configuration, among the two DMRS configurations, and, when the DMRS configuration field value is equal to '1', the PUSCH DMRS may be generated based upon a second configuration. More specifically, a seed value (e.g., cell ID or virtual cell ID), which is used for generating the DMRS sequence, may be determined in accordance with the value of the DMRS configuration field. Moreover, the number of SC-FDMA symbols for the PUSCH transmission may be determined based upon a cell-specific SRS subframe configuration of a cell (or RP) corresponding to the seed value (e.g., cell ID or virtual cell ID), which is used for generating the DMRS sequence.

Table 8 and Table 9, which are shown below, respectively show examples of a 2-bit DMRS configuration field in an uplink-related DCI format.

[Table 8]

| Value of DMRS configuration field | Description |
|---|---|
| '00' | The 1st DMRS configuration among multiple DMRS configurations |
| '01' | The 2nd DMRS configuration among multiple DMRS configurations |

(continued)

| Value of DMRS configuration field | Description |
|---|---|
| '10' | The 3rd DMRS configuration among multiple DMRS configurations |
| '11' | Reserved |

[Table 9]

| Value of DMRS configuration field | Description |
|---|---|
| '00' | The 1st DMRS configuration among multiple DMRS configurations |
| '01' | The 2nd DMRS configuration among multiple DMRS configurations |
| '10' | The 3rd DMRS configuration among multiple DMRS configurations |
| '11' | The 4th DMRS configuration among multiple DMRS configurations |

The example shown in Table 8 may correspond to a case when three PUSCH DMRS configuration candidates (e.g., three PUSCH DMRS configuration candidates, which are configured by upper layer signaling) exist for one UE. The example shown in Table 9 may correspond to a case when four PUSCH DMRS configuration candidates exist for one UE. In each case, one DMRS configuration is determined in accordance with the value of a DMRS configuration field of the uplink-related DCI, and the UE may decide the number of SC-FDMA symbols for the PUSCH transmission based upon a cell-specific SRS subframe configuration of a cell (or RP) corresponding to the seed value (e.g., cell ID or virtual cell ID), which is used for generating a sequence of the determined DMRS configuration.

Tables 7 to 9 shown above are merely exemplary, and the scope of the present invention includes diverse modification and/or combination of the examples shown in Tables 7 to 9, such as a case when five for more DMRS configuration candidates are given via upper layer signaling, or a case when a DMRS configuration field having a size equal to 3-bits or more is defined, and so on.

Additionally, even if the cell-specific SRS subframe configuration that is to be considered by the UE is not dynamically notified (or indicated) through a specific field of the uplink-related DCI (or by being tied to another field value), by using a union of the multiple cell-specific SRS subframe configurations, which are delivered via upper layer signaling, as described above, operations may be performed, so that PUSCH mapping can be performed in a subframe corresponding to any one of the SRS subframe configurations with the exception for the last SC-FDMA symbol. More specifically, when there is no indication as to which cell-specific SRS subframe configuration is to be applied, a union of all cell-specific SRS subframe configurations may be applied as default settings, or a union of all cell-specific SRS subframe configurations may be set to be applied always. In other words, operations may be performed, so that the value of a specific field of the uplink-related DCI can be set to '10' in the example of Table 4, and set to '11' in the example of Table 5, and set to '110' in the example of Table 6 as default setting or to be always applied accordingly.

Additionally, instead of applying the dynamic indication method (i.e., indication method performed through the uplink-related DCI) of the cell-specific SRS subframe configuration, as described above, the UE may decide the SRS subframe based upon a cell-specific SRS subframe configuration, which is semi-statically configured by upper layer signaling. In this case, instead of notifying all of the multiple cell-specific SRS subframe configurations applicable to the UE via upper layer signaling, one or more cell-specific SRS subframe configuration that should actually be considered by the UE may be notified via upper layer signaling. For example, one cell-specific SRS subframe configuration (this may belong to a serving cell or may belong to a neighboring cell) may be semi-statically notified to the UE via upper layer signaling. Accordingly, based upon the cell-specific SRS subframe configuration assigned to the UE, the corresponding UE may decide the number of SC-FDMA symbols of the PUSCH transmission subframe. More specifically, instead of following the cell-specific SRS subframe configuration of the serving cell, as proposed in the related art, the UE may be operated so as to be capable of determining whether or not to performing rate matching in a last symbol when performing PUSCH transmission in accordance with the cell-specific SRS subframe configuration of one or more random (or arbitrary) cells (or RPs), which are configured by the upper layer regardless of that of the serving cell.

Embodiment 2

The second embodiment of the present invention relates to a solution for determining an SRS subframe configuration based upon a radio frame timing (or offset) of multiple cells (or RPs) and to perform PUSCH transmission based upon the determined SRS subframe configuration.

For example, the CoMP UE, which performs uplink transmission for multiple RPs, may decide the SRS subframe that should actually be taken into consideration by interpreting the cell-specific SRS subframe configuration of each RP based upon radio frame timing between each of the multiple RPs, and the CoMP UE may decide whether or not to perform rate matching for the last SC-FDMA symbol in the PUSCH transmission subframe in accordance with the determined SRS subframe.

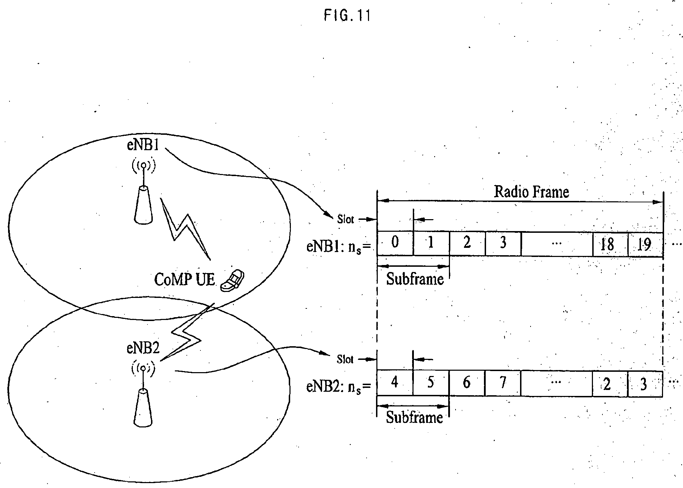

Fig. 11 illustrates a drawing for describing operations of the present invention, when radio frame timing between multiple RPs is different from one another.

The example of Fig. 11 shows a case when a difference between the radio frame timing (or offset) of the eNB1 and the radio frame timing (or offset) of the eNB2 is the equivalent 4 slots. More specifically, a case when the timing of Slot Index 0 of the radio frame of eNB1 is aligned with the timing of Slot Index 4 of the radio frame of eNB2 may be assumed.

As described above, a typical case when configuration is established so that slot indexes between neighboring cells (or RPs) do not overlap one another may correspond to a case when specific signals/channels assign an offset to one another, so that the same timing is not transmitted to the neighboring base stations, in an enhanced inter-cell interference coordination (eICIC) method (for example, the specific signals/channels may correspond to important (or significant) signals/channels that are transmitted only from a specific slot index, such as PSS (Primary Synchronization Signal)/SSS (Secondary Synchronization Signal) and PBCH (Physical Broadcast Channel), and so on). Additionally, in order to perform interference coordination within the time domain in the eICIC, specific subframes may be configured as ABSs (almost blank subframes) or r-ABSs (reduced-power ABSs), and so on, in accordance with a subframe bitmap pattern, which is defined in advance in a specific cell (*e.g.*, macro cell), thereby being capable of configuring in advance a subframe section, wherein a transmission power significantly lower than the transmission power of a general subframe is applied, and, in this section, since the intensity of the interference influencing neighboring cells (e.g., pico cells) is extremely low, a case of having the neighboring cells *(e.g.,* pico cells) respectively configuring slot index offsets differently, so that the important signals/channels (PSS/SSS and PBCH, and so on) can be transmitted under a low-interference environment in this section, may also be taken into consideration. Moreover, for other reasons related to a variety of other network coordinations, a slot index offset between neighboring cells may be given, as shown in Fig. 11. Additionally, the scope of the present invention will not be limited only to the inter-cell slot index offset situation between two cells, as shown in Fig. 11, and the scope of the present invention may also be applied to an environment, wherein the slot indexes of each cell are all different from one another, or wherein slot indexes of some of the cells are differently configured, when CoMP operation is performed between three or more cells.

In an exemplary situation, as shown in Fig. 11, when the CoMP UE performs uplink cooperative (or coordinated) communication with respect to eNB1 and eNB2, the cell-specific SRS subframe of each RP is required to be notified correctly. This is because, in case only the SRS cycle and offset are given in accordance with the srs-SubframeConfig value, as shown in Table 1 and Table 2, when a reference point at which the offset is determined cannot be accurately determined, it may be difficult to correctly decide to which subframe the cell-specific SRS subframe of the corresponding RP corresponds.

For example, in case multiple cells have the same radio frame timing, even if the SRS subframe cycle and offset are only notified, the actual SRS subframe may be correctly determined. Meanwhile, in case the radio frame timing of each of the multiple cells are not identical to one another, information on the timing difference (e.g., difference value (or offset) in subframe/slot units) should be notified to the UE. Accordingly, the UE may be capable of correctly determining the location of the actual SRS subframe for each RP, and, by correctly performing PUSCH rate matching in a specific subframe, CoMP operation errors may be prevented from occurring.

In order to do so, Table 1 and Table 2, which are presented above, may be corrected as shown below in Table 10 and Table 11.

[Table 10]

| srs-SubframeConfig | Binary | Configuration Period $T_{SFC}$ (subframes) | Transmission offset $\Delta_{SFC}$' (subframes) |
|---|---|---|---|
| 0 | 0000 | 1 | $\{mod(0+ \Delta n_s, 20)\}$ |
| 1 | 0001 | 2 | $\{mod(0+ \Delta n_s, 20)\}$ |
| 2 | 0010 | 2 | $\{mod(1+ \Delta n_s, 20)\}$ |
| 3 | 0011 | 5 | $\{mod(0+ \Delta n_s, 20)\}$ |
| 4 | 0100 | 5 | $\{mod(1+ \Delta n_s, 20)\}$ |
| 5 | 0101 | 5 | $\{mod(2+ \Delta n_s, 20)\}$ |
| 6 | 0110 | 5 | $\{mod(3+ \Delta n_s, 20)\}$ |

(continued)

| srs-SubframeConfig | Binary | Configuration Period $T_{SFC}$ (subframes) | Transmission offset $\Delta_{SFC}$' (subframes) |
|---|---|---|---|
| 7 | 0111 | 5 | {mod(0+ $\Delta n_s$, 20), mod(1+ $\Delta n_s$, 20)} |
| 8 | 1000 | 5 | {mod(2+ $\Delta n_s$, 20)}, mod (3+ $\Delta n_s$, 20)} |
| 9 | 1001 | 10 | {mod(0+ $\Delta n_s$, 20)} |
| 10 | 1010 | 10 | {mod(1+ $\Delta n_s$, 20)} |
| 11 | 1011 | 10 | {mod(2+ $\Delta n_s$, 20)} |
| 12 | 1100 | 10 | {mod(3+ $\Delta n_s$, 20)} |
| 13 | 1101 | 10 | {mod(0+ $\Delta n_s$, 20), mod(1+ $\Delta n_s$, 20), mod(2+ $\Delta n_s$, 20), mod(3+ $\Delta n_s$, 20), mod(4+ $\Delta n_s$, 20), mod(6+ $\Delta n_s$, 20), mod(8+ $\Delta n_s$, 20)} |
| 14 | 1110 | 10 | {mod(0+ $\Delta n_s$, 20), mod(1+ $\Delta n_s$, 20)}, mod(2+ $\Delta n_s$, 20), mod(3+ $\Delta n_s$, 20), mod(4+ $\Delta n_s$, 20), mod(5+ $\Delta n_s$, 20), mod(6+ $\Delta n_s$, 20), mod(8+ $\Delta n_s$, 20)} |
| 15 | 1111 | reserved | Reserved |

[Table 11]

| srs-SubframeConfig | Binary | Configuration Period $T_{SFC}$ (subframes) | Transmission offset $\Delta_{SFC}$' (subframes) |
|---|---|---|---|
| 0 | 0000 | 5 | {mod(1+ $\Delta n_s$, 20)} |
| 1 | 0001 | 5 | {mod(1+ $\Delta n_s$, 20), mod(2+ $\Delta n_s$, 20)} |
| 2 | 0010 | 5 | {mod(1+ $\Delta n_s$, 20), mod(3+ $\Delta n_s$, 20)} |
| 3 | 0011 | 5 | {mod(1+ $\Delta n_s$, 20), mod(4+ $\Delta n_s$, 20)} |
| 4 | 0100 | 5 | {mod(1+ $\Delta n_s$, 20), mod(2+ $\Delta n_s$, 20), mod(3+ $\Delta n_s$, 20)} |
| 5 | 0101 | 5 | {mod(1+ $\Delta n_s$, 20), mod(2+ $\Delta n_s$, 20), mod(4+ $\Delta n_s$, 20)} |
| 6 | 0110 | 5 | {mod(1+ $\Delta n_s$, 20), mod(3+ $\Delta n_s$, 20), mod(4+ $\Delta n_s$, 20)} |
| 7 | 0111 | 5 | {mod(1+ $\Delta n_s$, 20), mod(2+ $\Delta n_s$, 20), mod(3+ $\Delta n_s$, 20), mod(4+ $\Delta n_s$, 20)} |
| 8 | 1000 | 10 | {mod(1+ $\Delta n_s$, 20), mod(2+ $\Delta n_s$, 20), mod(6+ $\Delta n_s$, 20)} |
| 9 | 1001 | 10 | {mod(1+ $\Delta n_s$, 20), mod(3+ $\Delta n_s$, 20), mod(6+ $\Delta n_s$, 20)} |
| 10 | 1010 | 10 | {mod(1+ $\Delta n_s$, 20), mod(6+ $\Delta n_s$, 20), mod(7+ $\Delta n_s$, 20)} |
| 11 | 1011 | 10 | {mod(1+ $\Delta n_s$, 20), mod(2+ $\Delta n_s$, 20), mod(6+ $\Delta n_s$, 20), mod(8+ $\Delta n_s$, 20)} |
| 12 | 1100 | 10 | {mod(1+ $\Delta n_s$, 20), mod(3+ $\Delta n_s$, 20), mod(6+ $\Delta n_s$, 20), mod(9+ $\Delta n_s$, 20)} |
| 13 | 1101 | 10 | {mod(1+ $\Delta n_s$, 20), mod(4+ $\Delta n_s$, 20), mod(6+ $\Delta n_s$, 20), mod(7+ $\Delta n_s$, 20)} |

(continued)

| srs-SubframeConfig | Binary | Configuration Period $T_{SFC}$ (subframes) | Transmission offset $\Delta_{SFC}$' (subframes) |
|---|---|---|---|
| 14 | 1110 | reserved | Reserved |
| 15 | 1111 | reserved | Reserved |

The examples of Table 10 and Table 11 respectively correspond to the transmission offset $\Delta_{SFC}$ of Table 1 and Table 2 being modified to a $\Delta_{SFC}$' = mod($\Delta_{SFC}$+ $\Delta n_s$, 20) format. Herein, mod(A, 20) signifies a remaining value after dividing A by 20. Additionally, $\Delta n_s$ corresponds to a slot-unit difference value between a radio frame timing of a specific RP and a predetermined reference timing. Moreover, for example, the predetermined reference timing may correspond to a radio frame timing of a serving cell. Additionally, 20 corresponds to a number of slots configuring one radio frame. Alternatively, based upon the transmission offset $\Delta_{SFC}$ of Table 1 and Table 2 being defined in subframe units, the $\Delta_{SFC}$ may be used by being corrected to a $\Delta_{SFC}$' = mod($\Delta_{SFC}$+ $\lfloor\Delta n_s/2\rfloor$, 10) format. Herein, mod(A, 10) signifies a remaining value after dividing A by 10. Herein, 10 corresponds to a number of subframes configuring one radio frame.

When indication is to be made to the UE to be operated in accordance with the cell-specific SRS subframe configuration of a neighboring cell, and when the timing of the neighboring cell is identical to the timing of the serving cell of the UE, since there is no slot index offset (*i.e.*, $\Delta n_s$=0), the cell-specific SRS subframe configuration of the neighboring cell, which is indicated by an srs-SubframeConfig parameter given via upper layer signaling, shown in Table 10 (or Table 11) is identical to the configuration shown in Table 1 (or Table 2).

Alternatively, when indication is to be made to the UE to be operated in accordance with the cell-specific SRS subframe configuration of a neighboring cell, and when a difference between the slot index offset of the serving cell and the slot index offset of the neighboring cell is equal to 4, when performing cell-specific SRS configuration, an srs-SubframeConfig parameter may be provided to the UE along with the $\Delta n_s$=4 value via upper layer signaling. And, in this case, the UE may decide an actual SRS subframe additionally based upon the timing offset $\Delta n_s$=4, and the UE may correctly device whether or not to perform rate matching on the PUSCH based upon the determined SRS subframe.

In the example of Table 11, it will be assumed that a serving eNB of the CoMP UE corresponds to eNB1, and that eNB1 and eNB2 participates in the uplink CoMP. Additionally, it will also be assumed that a difference between an inter-cell slot index offset of a neighboring cell (*e.g.,* eNB2) and an inter-cell slot index offset of a serving cell (*e.g.,* eNB1) has a value equal to 4. Herein, as shown in Fig. 9, when the channel state between the CoMP UE and eNB2 is bad (or poor), and when the channel state between the CoMP UE and eNB1 is good, even if UE2 transmits an SRS at the same time point as the PUSCH transmission of the CoMP UE, a significant interference does not occur. Therefore, in order to avoid interference with the UE1, the CoMP UE may perform PUSCH transmission in accordance with the cell-specific SRS subframe configuration of eNB1. At this point, since the CoMP UE is required to directly follow the cell-specific SRS subframe configuration of eNB1, which corresponds to its serving cell, without any modification, the $\Delta n_s$=0 value (indicating that the same timing as the radio frame timing of the serving cell is being applied) may be provided to the CoMP UE along with the srsSubframeConfig value of eNB1 via upper layer signaling.

Alternatively, as shown in Fig. 10, when the channel state between the CoMP UE and eNB1 is bad (or poor), and when the channel state between the CoMP UE and eNB2 is good, even if UE1 transmits an SRS at the same time point as the PUSCH transmission of the CoMP UE, a significant interference does not occur. Therefore, even if the serving cell of the CoMP UE is eNB1, in order to avoid interference with the UE2, the CoMP UE may perform PUSCH transmission in accordance with the cell-specific SRS subframe configuration of eNB1. At this point, since the CoMP UE is required to follow the cell-specific SRS subframe configuration of eNB2, which does not correspond to its serving cell, the $\Delta n_s$=4 value (*i.e.,* indicating the difference value between the timing of a neighboring cell (*e.g.,* eNB2) and the serving cell (*e.g.,* eNB1) related to the cell-specific SRS subframe configuration, which is applied to the CoMP UE) may be provided to the CoMP UE via upper layer signaling. More specifically, based upon the subframe, wherein SRS transmission from UEs belonging to eNB2 (*e.g.*, UE2s) may exist, the CoMP UE may correctly calculate whether or not to perform rate matching on the last SC-FDMA symbol in the PUSCH transmission subframe of the CoMP UE.

Additionally, as shown in Table 10 and Table 11, as a modified example of the solution for defining an SRS subframe configuration based upon an inter-cell radio frame timing, the following method may be taken into consideration.

For example, a difference in inter-cell timing may be determined in subframe units instead of slot units, and this may be notified by using a parameter referred to as $\Delta n_{subframe}$. In this case, the transmission offset $\Delta_{SFC}$ of Table 1 and Table 2 may be used by being corrected to a $\Delta_{SFC}$'=mod($\Delta_{SFC}$+ $\Delta n_{subframe}$, 10) format. Herein, 10 corresponds to a number of subframes configuring one radio frame.

Alternatively, although the basic timing offset parameter is defined as a slot unit parameter, based upon the fact that the transmission offset $\Delta_{SFC}$ of Table 1 and Table 2 is defined in subframe units, $\Delta_{SFC}$ may be used by being

corrected to a $\Delta_{SFC}'=\mathrm{mod}(\Delta_{SFC}+\lfloor\Delta n_s/2\rfloor, T_{SFC})$ format. Additionally, based upon the information, that the SRS subframe cycle corresponds to $T_{SFC}$, instead of defining the transmission offset as an offset that does not exceed the number of subframes included in one radio frame, it may be more appropriate to define the transmission offset as an offset that does not exceed one SRS cycle.

Alternatively, instead of correcting Table 1 and Table 2, by correcting an equation (*i.e.*, Equation 2) that decides the conventional SRS subframe, the UE may be capable of correctly determining the SRS subframe based upon the inter-cell timing difference value. For example, Equation 2 may be corrected as Equation 3 shown below.

[Equation 3]

$$\lfloor\mathrm{mod}(n_s + \Delta n_s, 20)/2\rfloor \bmod T_{SFC} \in \Delta_{SFC}$$

More specifically, a subframe satisfying Equation 3 may be determined as the SRS subframe. Equation 3 corresponds to a corrected version of Equation 2, wherein $\lfloor n_s/2\rfloor$ of Equation 2 is corrected to $\lfloor\mathrm{mod}(n_s + \Delta n_s, 20)/2\rfloor$. More specifically, in light of the inter-cell timing offset being given in slot units and a subframe offset being calculated from the corresponding slot offset, information on which subframe corresponds to the SRS subframe may be determined.

The scope of the present invention will not be limited only to the examples and/or the modified examples of Table 11 and Table 12, which are shown above. More specifically, based upon the inter-cell timing difference (e.g., slot index offset), in order to correctly decide the SRS subframe without any errors, and in order to correctly perform PUSCH rate matching in accordance with the determined SRS subframe, in determining the SRS subframe, diverse mathematical expressions considering the inter-cell timing difference by using diverse methods are included in the scope of the present invention.

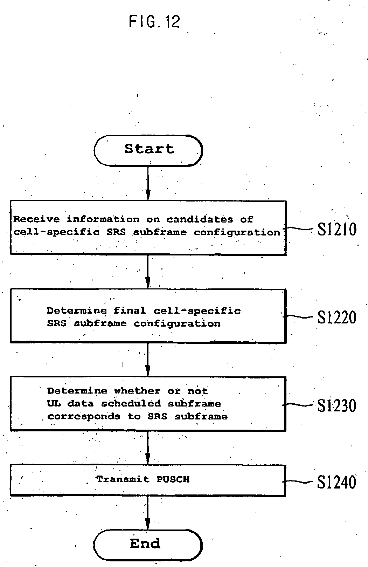

Fig. 12 illustrates a flow chart showing an uplink data transmission method according to the present invention.

In performing coordinated (or cooperative) communication (e.g., uplink CoMP operations, and so on) having multiple cells (or RPs) related thereto with respect to one UE, in order to correctly decide whether or not to perform rate matching if the uplink data (e.g., the PUSCH is not mapped to the last SC-FDMA symbol of the subframe), whether or not a subframe that is scheduled to transmit uplink data corresponds to an SRS subframe should be clearly determined. According to the present invention, in performing uplink CoMP operations, and so on, a method for correctly and clearly determining the SRS subframe may be provided.

In step S1210, the UE may receive information on candidate(s) of cell-specific SRS subframe configuration. And, as described above in the first embodiment, one or more cell-specific SRS subframe configuration may be provided to the CoMP UE via upper layer signaling, and this may be referred to as candidate(s) of cell-specific SRS subframe configuration.

In step S1220, the UE may decide a final cell-specific SRS subframe configuration based upon the candidate(s). For example, a union of the candidate(s) may be defined as the final cell-specific SRS subframe configuration. Additionally, in case the candidate is configured only of one cell-specific SRS subframe configuration (this may correspond to that of the serving cell or that of another cell), the corresponding configuration may be determined as the final configuration. Moreover, among the candidate(s), one or more configurations may be dynamically indicated. For example, as an explicit indication method, the final configuration may also be indicated by the value of a specific field (e.g., SRS subframe configuration field) of the DCI. Additionally, as an implicit indication method, the cell-specific SRS subframe configuration of cell(s) corresponding to a cell ID, which is determined by a specific field (e.g., DMRS configuration field) of the DCI, may be determined as the final configuration. Moreover, in accordance with the above-described diverse examples and exemplary modifications, the final cell-specific SRS subframe configuration may be determined from the candidate(s) of the cell-specific configuration.

Additionally, as a result of step S1220, the UE may decide the SRS subframe based upon the final cell-specific SRS subframe configuration.

In step S1230, the UE may decide whether or not the subframe having the uplink data scheduled therein corresponds to the SRS subframe. Accordingly, the UE may decide whether the uplink data are to be mapped to a last SC-FDMA symbol of the corresponding subframe (*i.e.,* the PUSCH rate matching is not performed in a subframe that does not correspond to the SRS subframe) or whether the uplink data are not to be mapped to the last SC-FDMA symbol of the corresponding subframe (*i.e.,* the PUSCH rate matching is performed in the SRS subframe).

In step S1240, the UE may map the uplink data over a resource of a subframe in accordance with the method determined in step S1230, and the UE may then perform uplink data transmission.

The details described in the above-described variety of exemplary embodiments of the present invention may be independently applied, or two or more exemplary embodiments may be simultaneously applied, and overlapping contents will be omitted for clarity in the description.

Furthermore, in describing the diverse exemplary embodiments of the present invention, although a base station has mostly been given as example of the uplink reception entity, and the uplink reception entity has been described accordingly, and, although a user equipment has mostly been given as an example of the uplink transmission entity, and the uplink transmission entity has been described accordingly, the scope of the present invention will not be limited only to this. More specifically, in case a relay station is given as a downlink transmission entity toward a user equipment or in case the relay station is given as an uplink reception entity from the user equipment, or, in case a relay station is given as an uplink transmission entity toward a base station or in case the relay station is given as a downlink reception entity from the base station, the same principles that are described above in accordance with the diverse exemplary embodiments of the present invention may be equally applied.

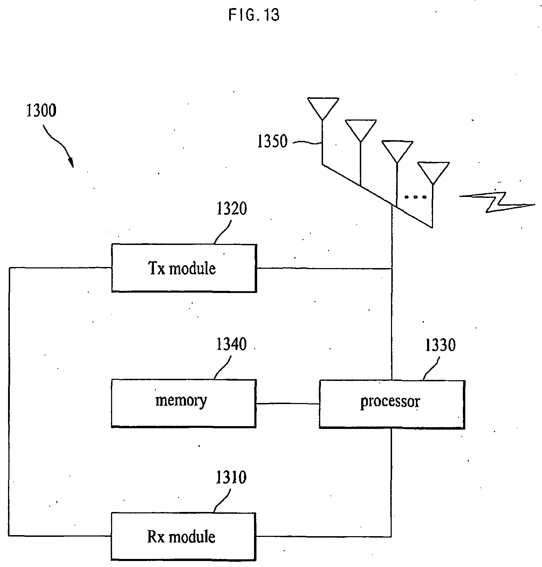

Fig. 13 illustrates a structure of a user equipment device according to a preferred embodiment of the present invention.

Referring to Fig. 13, the user equipment device (1300) according to the present invention may include a receiver (1310), a transmitter (1320), a processor (1330), a memory (1340), and multiple antennae (1350). The multiple antennae (1350) indicate that the user equipment device supports MIMO transmission/reception (or transception). The receiver module (1310) may receive diverse signals, data, and information from an external device (*e.g.,* the base station). The transmitter (1320) may transmit diverse signals, data, and information to an external device (e.g., the base station). The processor (1330) may control the overall operations of the user equipment device (1300).

The user equipment device (1300) according to the example of the present invention may be configured to decide a cell-specific SRS subframe configuration and to transmit uplink data accordingly. The processor (1330) of the user equipment device (1300) may be configured to receive information on cell-specific SRS subframe configuration candidates through the receiver (1310), and the processor (1330) of the user equipment device (1300) may also be configured to decide the SRS subframe based upon the received information. Additionally, the processor (1330) may be configured to decide whether or not a subframe scheduled to transmit uplink data corresponds to the SRS subframe, and the processor (1330) may be configured to decide whether or not to map the uplink data to the last SC-FDMA symbol of the corresponding subframe based upon the decision result. Furthermore, based upon the decision result, the processor (1330) may be configured to transmit the uplink data at the subframe by using the transmitter (1320).

In addition to the above-described functions, the processor (1330) of the user equipment device (1300) may perform functions of performing calculation operations of information received by the user-equipment device (1300), information that is to be transmitted to an external target, and so on, and the memory (1340) may store the calculated information for a predetermined period of time, and the memory (1340) may also be replaced with another element, such as a buffer (not shown).

The detailed structure of the user equipment device, as described above, may be implemented by independently applying the detailed described in diverse exemplary embodiments of the present invention or may be implemented by simultaneously applying two or more exemplary embodiments of the present invention. And, for clarity in the description, overlapping contents will be omitted.

Additionally, although it is not shown in Fig. 13, the base station device may be configured to provide information on the cell-specific SRS subframe configuration candidates to the user equipment device (1300) via upper layer signaling, and so on. Moreover, the base station device may also be configured to dynamically provide explicit/implicit indication information enabling the user equipment device (1300) to decide the final cell-specific SRS subframe configuration. Furthermore, the base station device may also be configured to receive the uplink data that are transmitted from the user equipment device (1300).

Furthermore, the description of the user equipment device (1300) of Fig. 13 may also be equally applied to the description of a relay station device, which operates as an uplink transmission entity or a downlink reception entity. Also, the description of the base station device may be equally applied to the description of a relay station device, which operates as a downlink transmission entity or an uplink reception entity.

The above-described embodiments of the present invention may be implemented by using a variety of methods. For example, the embodiments of the present invention may be implemented in the form of hardware, firmware, or software, or in a combination of hardware, firmware, and/or software.

In case of implementing the embodiments of the present invention in the form of hardware, the method according to the embodiments of the present invention may be implemented by using at least one of ASICs (Application Specific Integrated Circuits), DSPs (Digital Signal Processors), DSPDs (Digital Signal Processing Devices), PLDs (Programmable Logic Devices), FPGAs (Field Programmable Gate Arrays), processors, controllers, micro controllers, micro processors, and so on.

In case of implementing the embodiments of the present invention in the form of firmware or software, the method according to the embodiments of the present invention may be implemented in the form of a module, procedure, or function performing the above-described functions or operations. A software code may be stored in a memory unit and driven by a processor. Herein, the memory unit may be located inside or outside of the processor, and the memory unit may transmit and receive data to and from the processor by using a wide range of methods that have already been disclosed.

The detailed description of the preferred embodiments of the present invention disclosed herein as described above is provided so that those skilled in the art can easily implement and realize the present invention. Although the embodiment of the present invention has been described with reference to the accompanying drawings, the described embodiment of the present invention is merely exemplary. Therefore, it will be apparent to those skilled in the art that various modifications and variations can be made in the present invention without departing from the scope of the invention. For example, anyone skilled in the art may combine each component disclosed in the description of the embodiments of the present invention. Therefore, it is intended that the present invention covers the modifications and variations of this invention provided they come within the scope of the appended claims, and it is not intended to limit the present invention only to the examples presented herein.

Furthermore, the present invention may be realized in another concrete configuration (or formation) without deviating from the scope of the essential characteristics of the present invention. Therefore, in all aspects, the detailed description of present invention is intended to be understood and interpreted as an exemplary embodiment of the present invention without limitation. The scope of the present invention shall be determined based upon a reasonable interpretation of the appended claims of the present invention and shall come within the scope of the appended claims. Therefore, it is intended that the present invention covers the modifications and variations of this invention provided they come within the scope of the appended claims, and it is not intended to limit the present invention only to the examples presented herein. Furthermore, claims that do not have any explicit citations within the scope of the claims of the present invention may either be combined to configure another embodiment of the present invention, or new claims may be added during the amendment of the present invention after the filing for the patent application of the present invention.

[Industrial Applicability]

The above-described exemplary embodiments of the present invention may be applied to diverse mobile communication systems.

**Claims**

1. A method of transmitting uplink data by a user equipment in a wireless communication system, the method comprising:

   receiving information on a cell-specific sounding reference signal, SRS, subframe configuration candidate including multiple cell-specific SRS subframe configurations for uplink Coordinated Multi-Point, CoMP, operation;
   **characterised in that** it further comprises
   obtaining information on an SRS subframe based upon a final cell-specific SRS subframe configuration which is obtained from one or more cell-specific SRS subframe configurations indicated by downlink control information, DCI, for the user equipment among the multiple cell-specific subframe configurations of the cell-specific SRS subframe configuration candidate;
   determining whether or not the uplink data is mapped to a last Single Carrier Frequency Division Multiple Access, SC-FDMA, symbol of a subframe, based upon whether or not the subframe scheduled to transmit the uplink data corresponds to the SRS subframe; and
   transmitting the uplink data at the subframe, based upon a result of the determination.

2. The method of claim 1, wherein a field indicating the one or more cell-specific SRS subframe configurations corresponds to a field for a Demodulation Reference Signal, DMRS, configuration of the DCI.

3. The method of claim 1, wherein the one or more cell-specific SRS subframe configurations correspond to a cell identifier being determined by the field for the DMRS configuration.

4. The method of claim 1, wherein information on a radio frame timing offset between a cell related to the final cell-specific SRS subframe configuration and a reference cell is provided to the user equipment.

5. The method of claim 4, wherein the reference cell corresponds to a serving cell of the user equipment.

6. The method of claim 4, wherein the final cell-specific SRS subframe configuration is determined by further considering the timing offset.

7. The method of claim 1, wherein the information on the cell-specific SRS subframe configuration candidate is provided to the user equipment via upper layer signaling.

8. The method of claim 1, wherein the cell-specific SRS subframe configuration is specified by a SRS transmission period and offset.

9. The method of claim 1, wherein, when the subframe scheduled to transmit the uplink data corresponds to the SRS subframe, the uplink data are not mapped to the last SC-FDMA symbol, and

   wherein, when the subframe scheduled to transmit the uplink data does not correspond to the SRS subframe, the uplink data are mapped to the last SC-FDMA symbol.

10. A user equipment for transmitting uplink data, the user equipment comprising:

    a receiver configured to receive information on a cell-specific sounding reference signal, SRS, subframe configuration candidate including multiple cell-specific SRS subframe configurations for uplink Coordinated Multi-Point, CoMP, operation; the user equipment **characterised in that** it further comprises:

    a processor configured to obtain information on an SRS subframe based upon a final cell-specific SRS subframe configuration which is obtained from one or more cell-specifc SRS subframe configurations indicated by downlink control information for the user equipment among the multiple cell-specific subframe configurations of the cell-specific SRS subframe configuration candidate, and to determine whether or not the uplink data is mapped to a last Single Carrier Frequency Division Multiple Access, SC-FDMA, symbol of a subframe, based upon whether or not the subframe scheduled to transmit the uplink data corresponds to the SRS subframe; and
    a transmitter configured to transmit the uplink data at the subframe, based upon a result of the determination.

## Patentansprüche

1. Verfahren zum Übertragen von Uplinkdaten durch ein Benutzerendgerät in einem drahtlosen Kommunikationssystem, wobei das Verfahren umfasst:

   Empfangen von Information über einen zellenspezifischen Sounding Reference Signal, SRS, -Unterrahmenkonfigurationskandidaten, der mehrere zellenspezifische SRS-Unterrahmenkonfigurationen für einen Uplink Coordinated Multi-Point, CoMP, - Betrieb aufweist; **dadurch gekennzeichnet, dass** es ferner umfasst
   Erhalten von Information über einen SRS-Unterrahmen basierend auf einer finalen zellenspezifischen SRS-Unterrahmenkonfiguration, welche erhalten wird von einer oder mehreren zellenspezifischen SRS-Unterrahmenkonfigurationen, die angezeigt werden durch Downlink-Steuerinformation, DCI, für das Benutzerendgerät unter den mehreren zellenspezifischen Unterrahmenkonfigurationen des zellenspezifischen SRS-Unterrahmenkonfigurationskandidats;
   Ermitteln, ob die Uplinkdaten auf ein letztes Single Carrier Frequency Division Multiple Access, SC-FDMA, -Symbol eines Unterrahmens abgebildet werden oder nicht, basierend darauf, ob der für die Übertragung der Uplinkdaten eingeplante Unterrahmen dem SRS-Unterrahmen entspricht oder nicht; und
   Übertragen der Uplinkdaten auf dem Unterrahmen basierend auf einem Ergebnis der Ermittlung.

2. Verfahren nach Anspruch 1, wobei ein Feld, das die einen oder mehreren zellenspezifischen SRS-Unterrahmenkonfigurationen angibt, einem Feld für eine Demodulationsreferenzsignal, DRMS, -Konfiguration der DCI entspricht.

3. Verfahren nach Anspruch 1, wobei die einen oder mehreren zellenspezifischen SRS-Unterrahmenkonfigurationen einem Zellenidentifizierer entsprechen, der durch das Feld für die DMRS-Konfiguration ermittelt wird.

4. Verfahren nach Anspruch 1, wobei Information über einen Funkrahmen-Timingversatz zwischen einer Zelle, die mit der finalen zellenspezifischen SRS-Subrahmenkonfiguration zusammenhängt, und einer Referenzzelle dem Benutzerendgerät bereitgestellt wird.

5. Verfahren nach Anspruch 4, wobei die Referenzzelle einer aktiven Zelle des Benutzerendgeräts entspricht.

6. Verfahren nach Anspruch 4, wobei die finale zellenspezifische SRS-Unterrahmenkonfiguration ferner unter Berücksichtigung des Timingversatzes ermittelt wird.

**7.** Verfahren nach Anspruch 1, wobei die Information über den zellenspezifischen SRS-Unterrahmenkonfigurationskandidaten dem Benutzerendgerät über Signalisierung von einer oberen Schicht bereitgestellt wird.

**8.** Verfahren nach Anspruch 1, wobei die zellenspezifische SRS-Unterrahmenkonfiguration durch eine SRS-Übertragungszeitspanne und -Offset spezifiziert wird.

**9.** Verfahren nach Anspruch 1, wobei, wenn der für die Übertragung der Uplink-daten eingeplante Unterrahmen dem SRS-Unterrahmen entspricht, die Uplinkdaten nicht auf das letzte SC-FDMA-Symbol abgebildet werden, und wobei, wenn der für die Übertragung der Uplinkdaten eingeplante Unterrahmen nicht dem SRS-Unterrahmen entspricht, die Uplinkdaten auf das letzte SC-FDMA-Symbol abgebildet werden.

**10.** Benutzerendgerät zum Übertragen von Uplinkdaten, wobei das Benutzerendgerät umfasst:

einen Empfänger, der dazu ausgebildet ist, Information über einen zellenspezifischen Sounding Reference Signal, SRS, - Unterrahmenkonfigurationskandidaten zu empfangen, der mehrere zellenspezifische SRS-Unterrahmenkonfigurationen für einen Uplink Coordinated Multi-Point, CoMP, - Betrieb aufweist; wobei das Benutzerendgerät **dadurch gekennzeichnet ist, dass** es ferner umfasst:
einen Prozessor, der dazu ausgebildet ist, Information über einen SRS-Unterrahmen zu erhalten basierend auf einer finalen zellenspezifischen SRS-Unterrahmenkonfiguration, welche erhalten wird von ein oder mehreren zellenspezifischen SRS-Unterrahmenkonfigurationen, die angegeben werden durch Downlinksteuer-information für das Benutzerendgerät unter den mehreren zellenspezifischen Unterrahmenkonfigurationen des zellenspezifischen SRS-Unterrahmenkonfigurationskandidats, und zu ermitteln, ob die Uplinkdaten auf ein letztes Single Carrier Frequency Division Multiple Access, SC-FDMA, -Symbol eines Unterrahmens abgebildet werden oder nicht basierend darauf, ob der für die Übertragung der Uplinkdaten eingeplante Unterrahmen dem SRS-Unterrahmen entspricht oder nicht; und
einen Sender, der dazu ausgebildet ist, die Uplinkdaten auf dem Unterrahmen basierend auf einem Ergebnis der Ermittlung auszusenden.

## Revendications

**1.** Procédé de transmission de données en liaison montante grâce à un équipement utilisateur dans un système de communication sans fil, comprenant :

la réception d'informations concernant un candidat de configuration de sous-trame d'un signal de référence sonore, SRS, spécifique à une cellule comprenant de multiples configurations de sous-trames SRS spécifiques à une cellule destinées à une opération à points multiples coordonnés, CoMP, en liaison montante ;

**caractérisé en ce qu'**il comprend en outre :

l'obtention d'informations concernant une sous-trame SRS sur la base d'une configuration finale de sous-trame SRS spécifique à une cellule qui est obtenue à partir d'une ou plusieurs configurations de sous-trames SRS spécifiques à une cellule indiquées par des informations de commande en liaison descendante, DCI, pour l'équipement utilisateur parmi les multiples configurations de sous-trames spécifiques à une cellule du candidat de configuration de sous-trame SRS spécifique à une cellule ;
la détermination que les données en liaison montante sont mappées ou non sur un dernier symbole d'une sous-trame d'accès multiple par répartition en fréquence à porteuse unique, SC-FDMA, sur la base que la sous-trame prévue pour transmettre les données en liaison montante correspond ou non à la sous-trame SRS ; et
la transmission des données en liaison montante à la sous-trame, sur la base d'un résultat de la détermination.

**2.** Procédé selon la revendication 1, dans lequel un champ indiquant la ou les plusieurs configurations de sous-trames SRS spécifiques à une cellule correspond à un champ destiné à une configuration d'un signal de référence de démodulation, DMRS, des DCI.

**3.** Procédé selon la revendication 1, dans lequel la ou les plusieurs configurations de sous-trames SRS spécifiques à une cellule correspondent à un identifiant de cellule qui est déterminé par le champ destiné à la configuration DMRS.

**4.** Procédé selon la revendication 1, dans lequel des informations concernant un décalage temporel d'une trame radio entre une cellule liée à la configuration finale de sous-trame SRS spécifique à une cellule et une cellule de référence sont fournies à l'équipement utilisateur.

5. Procédé selon la revendication 4, dans lequel la cellule de référence correspond à une cellule de service de l'équipement utilisateur.

6. Procédé selon la revendication 4, dans lequel la configuration finale de sous-trame SRS spécifique à une cellule est déterminée en considérant en outre le décalage temporel.

7. Procédé selon la revendication 1, dans lequel les informations concernant le candidat de configuration de sous-trame SRS spécifique à une cellule sont fournies à l'équipement utilisateur par l'intermédiaire d'une signalisation de couche supérieure.

8. Procédé selon la revendication 1, dans lequel la configuration de sous-trame SRS spécifique à une cellule est spécifiée par une période de transmission SRS et un décalage.

9. Procédé selon la revendication 1, dans lequel, lorsque la sous-trame prévue pour transmettre les données en liaison montante correspond à la sous-trame SRS, les données en liaison montante ne sont pas mappées sur le dernier symbole SC-FDMA, et
dans lequel, lorsque la sous-trame prévue pour transmettre les données en liaison montante ne correspond pas à la sous-trame SRS, les données en liaison montante sont mappées sur le dernier symbole SC-FDMA.

10. Équipement utilisateur permettant de transmettre des données en liaison montante, l'équipement utilisateur comprenant :

un récepteur configuré pour recevoir des informations concernant un candidat de configuration de sous-trame d'un signal de référence sonore, SRS, spécifique à une cellule comprenant de multiples configurations de sous-trames SRS spécifiques à une cellule destinées à une opération à points multiples coordonnés, CoMP, en liaison montante ;
l'équipement utilisateur **caractérisé en ce qu'**il comprend en outre :

un processeur configuré pour obtenir des informations concernant une sous-trame SRS sur la base d'une configuration finale de sous-trame SRS spécifique à une cellule qui est obtenue à partir d'une ou plusieurs configurations de sous-trames SRS spécifiques à une cellule indiquées par des informations de commande en liaison descendante pour l'équipement utilisateur parmi les multiples configurations de sous-trames spécifiques à une cellule du candidat de configuration de sous-trame SRS spécifique à une cellule, et pour déterminer que les données en liaison montante sont mappées ou non sur un dernier symbole d'une sous-trame d'accès multiple par répartition en fréquence à porteuse unique, SC-FDMA, sur la base que la sous-trame prévue pour transmettre les données en liaison montante correspond ou non à la sous-trame SRS ; et
un émetteur configuré pour transmettre les données en liaison montante à la sous-trame, sur la base d'un résultat de la détermination.

**FIG. 1**

Radio frame

| Slot | | | | | |
|---|---|---|---|---|---|
| #0 | #1 | #2 | ⋯ | #18 | #19 |

Sub-frame

(a)

One radio frame, $T_s = 307200T = 10ms$

One half-frame, $T_s = 153600T = 5ms$

One slot, $T_{slot} = 15360T_s$

$30720T_s$

| Subframe#0 | | | | Subframe#2 | Subframe#3 | Subframe#4 | Subframe#5 | | | | Subframe#7 | Subframe#8 | Subframe#9 |

One subframe, $30720T_s$

DwPTS  GP  UpPTS

DwPTS  GP  UpPTS

(b)

FIG.2

One downlink slot

7 OFDM symbols

Resource block
12×7 resource elements

Resource element

N$^{DL}$ × 12 Sub-carriers

12 Sub-carriers

FIG.3

Control region               Data region

1st slot                2nd slot

Frequency

One sub-frame

Time

FIG.4

FIG.5

One sub-frame

FIG. 6

slot 0 = 0.5 ms ——— slot 1 = 0.5 ms ———

| CP | LB#1 | CP | LB#2 | CP | LB#3 | CP | LB#4 RS | CP | LB#5 | CP | LB#6 | CP | LB#7 | CP | LB#8 | CP | LB#9 | CP | LB#10 | CP | LB#11 RS | CP | LB#12 | CP | LB#13 | CP | LB#14 SRS |

——— subframe = 1 ms ———

EP 2 806 581 B1

**FIG. 7**

FIG.8

eNB1

eNB2

PUSCH
(eNB1's SRS SF config)

CoMP UE

Collision

SRS
(eNB2's SRS SF config)

Non-CoMP UE

FIG.9

FIG. 10

FIG.11

eNB1
((φ))

CoMP UE

eNB2
((φ))

Radio Frame

Slot →

eNB1: $n_s$ =

| 0 | 1 | 2 | 3 | ... | 18 | 19 | ... |

Subframe

Slot →

eNB2: $n_s$ =

| 4 | 5 | 6 | 7 | ... | 2 | 3 | ... |

Subframe

FIG.12

```
          ┌─────────────────┐
          │      Start       │
          └─────────────────┘
                   │
                   ▼
 ┌──────────────────────────────────────┐
 │ Receive information on candidates of  │ ── S1210
 │ cell-specific SRS subframe configuration│
 └──────────────────────────────────────┘
                   │
                   ▼
 ┌──────────────────────────────────────┐
 │     Determine final cell-specific     │ ── S1220
 │       SRS subframe configuration      │
 └──────────────────────────────────────┘
                   │
                   ▼
 ┌──────────────────────────────────────┐
 │         Determine whether or not      │
 │       UL data scheduled subframe      │ ── S1230
 │       corresponds to SRS subframe     │
 └──────────────────────────────────────┘
                   │
                   ▼
 ┌──────────────────────────────────────┐
 │            Transmit PUSCH             │ ── S1240
 └──────────────────────────────────────┘
                   │
                   ▼
          ┌─────────────────┐
          │       End        │
          └─────────────────┘
```

FIG. 13

**EP 2 806 581 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20110098054 A1